# EUROPEAN PATENT APPLICATION

(11) **EP 4 443 350 A1**
(43) Date of publication of application: **09.10.2024**
(21) Application number: 24159312.8
(22) Date of filing: 23.02.2024
(51) Int. Cl.: G06Q 10/02, G06Q 50/40, G08B 21/02

(54) **TRANSPORTATION SERVICE PROVISION SYSTEM AND TRANSPORTATION SERVICE PROVISION METHOD FOR A USER HAVING A DIFFICULTY**

(30) Priority: 04.04.2023 JP 2023061037
(71) Applicant: Shimadzu Corporation, Nakagyo-ku, Kyoto-shi, Kyoto 604-8511 (JP)
(72) Inventor: WATANABE, Ryusuke, Kyoto-shi, Kyoto, 604-8511 (JP); TACHI, Masakuni, Kyoto-shi, Kyoto, 604-8511 (JP); SUGIE, Tomoya, Kyoto-shi, Kyoto, 604-8511 (JP); HOSHINO, Shogo, Kyoto-shi, Kyoto, 604-8511 (JP); IWATA, Naoki, Kyoto-shi, Kyoto, 604-8511 (JP)
(74) Representative: Müller-Boré & Partner Patentanwälte PartG mbB

(57) **Abstract**

This transportation service provision system (100) includes a terminal (1) configured for a guardian (91) of the user (90) to input route information (10) on transportation of the user in advance and a server (2) owned by a company (92) that provides the user with the transportation service. The server (2) includes a storage unit (2b) configured to store the user (90) and the guardian (91) in an associated manner, and a control unit (2a) configured to acquire the route information (10) and provide the user with the transportation vehicle (3) capable of transporting the user (90) without the user (90) having to drive.

## Description

### BACKGROUND OF THE INVENTION

### Field of the Invention

The present invention relates to a transportation service provision system and a transportation service provision method. It particularly relates to a transportation service provision system and a transportation service provision method using a transportation vehicle not driven by a user themselves.

### Description of the Related Art

The following description sets forth the inventor's knowledge of the related art and problems therein and should not be construed as an admission of knowledge in the prior art.

Conventionally, a transportation service provision system using a transportation vehicle not driven by a user is known. Such a transportation service provision system is disclosed, for example, in Japanese Unexamined Patent Application Publication No. 2022-177642.

The taxi dispatch system described in Japanese Unexamined Patent Application Publication No. 2022-177642 is provided with a plurality of cab vehicles and a management center. The taxi vehicle disclosed in the above-described Japanese Unexamined Patent Application Publication No. 2022-177642 is configured to receive a request from a user and transport the user to a destination. Further, the taxi vehicle disclosed in Japanese Unexamined Patent Application Publication No. 2022-177642 is an autonomous vehicle that does not have a driver on board and performs all dynamic driving tasks on the vehicle side.

Here, in the taxi system (transportation service provision system) described in Japanese Unexamined Patent Application Publication NO. 2022-177642, a taxi dispatch system (transportation service provision system) is provided to a user upon their own request. However, some users may be unfamiliar with handling the terminal to perform the operation to request the provision of a transportation vehicle and may have difficulty in requesting the provision of the transportation vehicle by themselves. In this case, it is difficult for the user to use the transportation service provision system.

### SUMMARY OF THE INVENTION

The present invention has been made to solve the above problems. One object of the present invention is to provide a transportation service provision system and a transportation service provision method capable of providing a transportation vehicle to a user who have difficulty in driving a transportation vehicle and also have difficulty in requesting the provision of a transportation vehicle by themselves.

In order to attain the above-described object, the transportation service provision system according to the first aspect of the present invention is a transportation service provision system for providing a transportation service to a user having difficulty in driving a transportation vehicle, the system comprising:
a terminal configured for a guardian of the user to input route information on transportation of the user in advance; and
a server owned by a company that provides the user with the transportation service,
wherein the server includes a storage unit configured to store the user and the guardian in an associated manner, and a control unit configured to acquire the route information and provide the user with the transportation vehicle capable of transporting the user without the user having to drive.

Note that in this specification, the term "guardian" includes the family, the relatives, and the acquaintances of a user, and the person related to the user. The person related to the user includes physicians, nurses, and caregivers. Further, "providing a transportation vehicle to a user" means providing a transportation vehicle service to a user.

A transportation service provision method according to a second aspect of the present invention is a transportation service provision method for providing a transportation service to a user having difficulty in driving a transportation vehicle, the method comprising:
a step for the guardian of the user to input route information on transportation of the user in advance;
a step for the server to store the user and the guardian in an associative manner; and
a step for the server to acquire the route information and provide the user with the transportation vehicle capable of transporting the user without the user having to drive the vehicle.

The transportation service provision system according to the first aspect of the present invention and the transportation service provision method according to the second aspect aspect of the present invention provide a user with a transportation vehicle, based on a route information input by the guardian of the user, as described above. With this, it is possible to provide a user with a transportation vehicle based on the route information input by the guardian, without the user having to request the provision of the vehicle. As a result, it is possible to provide a transportation vehicle to a user who has difficulty in driving a transportation vehicle and also has difficulty in requesting the provision of a transportation vehicle by themselves.

### BRIEF DESCRIPTION OF THE DRAWINGS

The preferred embodiments of the present invention are shown by way of example, and not limitation, in the accompanying figures.
FIG. 1 is a block diagram showing a configuration of a transportation service provision system according to one embodiment.
FIG. 2 is a block diagram showing a configuration of a terminal used by a guardian to input route information in a transportation service provision system according to one embodiment.
FIG. 3 is a block diagram showing a configuration of a server according to one embodiment.
FIG. 4 is a block diagram showing a configuration of a transportation vehicle used by a user in a transportation service provision system according to one embodiment.
FIG. 5 is a schematic diagram describing a configuration of a transportation vehicle according to one embodiment.
FIG. 6 is a schematic diagram showing a user information input screen displayed when a guardian inputs information about a user at a terminal according to one embodiment.
FIG. 7 is a schematic diagram showing a route information input screen displayed when a guardian inputs route information at a terminal according to one embodiment.
FIG. 8 is a schematic diagram showing a screen displaying caution notice information on a display unit of a transportation vehicle when a user gets in or out of a vehicle according to one embodiment.
FIG. 9 is a schematic diagram showing a screen displaying information indicating that a user has forgotten to load belongings on a display unit of a transportation vehicle according to one embodiment.
FIG. 10 is a schematic diagram showing a screen displaying a movement route on a display unit of a transportation vehicle when a user is being transported by the transportation vehicle according to one embodiment.
FIG. 11 is a schematic diagram showing a screen displaying information for restraining a user from getting off a vehicle on a display unit of a transportation vehicle when the user is being transported by a transportation vehicle according to one embodiment.
FIG. 12 is a schematic diagram showing a screen displaying information indicating that the user has forgotten to unload their belongings to the user on a display unit of a transportation vehicle according to one embodiment.
FIG. 13 is a schematic diagram showing a movement information display screen displayed when a guardian browses user's movement information on a terminal according to one embodiment.
FIG. 14 is a schematic diagram showing a screen displaying information about the user's physical conditions at a terminal according to one embodiment.
FIG. 15 is a flowchart describing processing to provide a transportation service in a transportation service provision system according to one embodiment.
FIG. 16 is a flowchart describing pre-registration processing in a transportation service provision system according to one embodiment.
FIG. 17 is a flowchart describing service provision processing in a transportation service provision system according to one embodiment.

### DETAILED DESCRIPTION OF THE PREFERRED EMBODIMENTS

Hereinafter, some embodiments in which the present invention is embodied will be described based on the attached drawings.

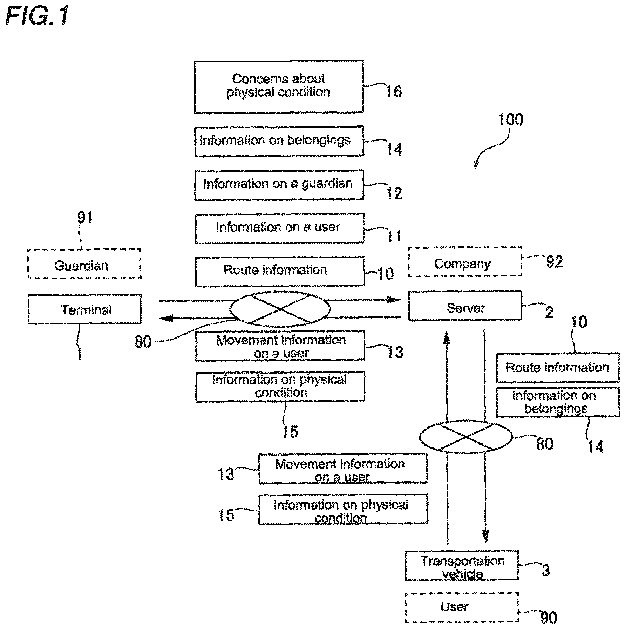

Referring to FIG. 1 to FIG. 14, a transportation service provision system 100 according to this embodiment of the present invention will be described.

### (Overall Configuration of Transportation Service Provision System)

As shown in FIG. 1, the transportation service provision system 100 is provided with a terminal 1 and a server 2. The transportation service provision system 100 is a transportation service provision system that provides a user 90 who has difficulty in driving a transportation vehicle 3 with a transportation service. Specifically, the transportation service provision system 100 is a system that provides the user 90 with the transportation vehicle 3 by a request made by a guardian 91 to a company 92. In this embodiment, the user 90 is an aged person or a dementia patient.

As shown in FIG. 1, the terminal 1 and the server 2 are connected via a network 80. Further, the server 2 and the transportation vehicle 3 are connected via the network 80. The network 80 includes, for example, the Internet. In other words, the network 80 is an open network that can be connected to things other than the terminal 1, the server 2, and the transportation vehicle 3.

The terminal 1 is configured such that the guardian 91 of the user 90 can input in advance the route information 10 when the user 90 is transported. The terminal 1 includes, for example, a smartphone, a tablet device, etc. The detailed configuration of the terminal 1 will be described later.

The server 2 provides the user 90 with a transportation service. Specifically, the server 2 provides the user 90 with the transportation vehicle 3 that can transport the user 90 without the user 90 having to drive. Further, the server 2 provides the guardian 91 in a remote location with the movement information 13 on the user 90 so that the guardian 91 can view the movement information. The server 2 is owned by the company 92 and is located, for example, in a data center. The detailed configuration of the server 2 will be described below.

The transportation vehicle 3 is configured to transport the user 90 without the user 90 having to drive. The detailed configuration of the transportation vehicle 3 will be described below.

### (Terminal)

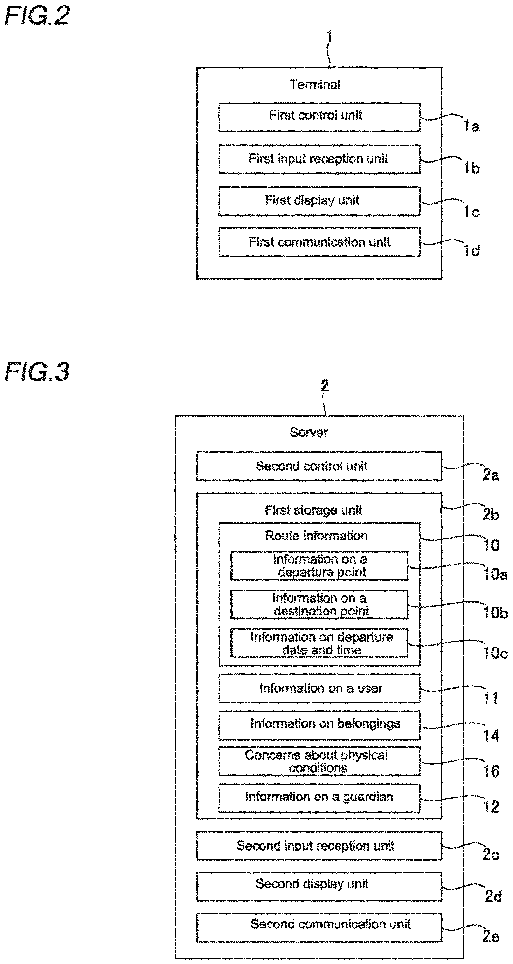

As shown in FIG. 2, the terminal 1 is equipped with a first control unit 1a, a first input reception unit 1b, a first display unit 1c, and a first communication unit 1d.

The first control unit 1a is configured to control each part of the terminal 1. The first control unit 1a includes, for example, a processor, such as, e.g., a CPU (Central Processing Unit) and circuitry, and memory, such as, e.g., a ROM (Read Only Memory) and a RAM (Random Access Memory).

The first input reception unit 1b is configured to receive an input from the guardian 91 (see FIG. 1). The first input reception unit 1b includes, for example, an input device such as a touchpad.

The first display unit 1c is configured to display a screen for the guardian 91 to input the information 11 (see FIG. 1) on the user 91, a screen for displaying the movement information 13 (see FIG. 1) about the user 90, and the like. The first display unit 1c includes, for example, an LCD monitor. Note that the first input reception unit 1b and the first display unit 1c may be integrally configured, for example, as a touch panel.

The first communication unit 1d is configured to be connectable to the server 2 (see FIG. 1) via the network 80 (see FIG. 1). The first communication unit 1d includes an interface for wired communication or an interface for wireless communication.

Referring to FIG. 1, as shown in FIG. 1, the terminal 1 is configured to transmit the route information 10 input by the guardian 91, the information 11 on the user 90, the information 12 on the guardian 91, the information 14 on the belongings of the user 90, and the concerns 16 about the physical conditions of the user 90 to the server 2 via the network 80. Further, the terminal 1 is configured to receive the movement information 13 on the user 90 and the information 15 on the physical conditions of the user 90 from the server 2 via the network 80. The details of the route information 10, the information 11 on the user 90, the information 12 on the guardian 91, the movement information 13 on the user 90, the information 14 on the belongings of the user 90, the information 15 on the physical conditions of the user 90, and the concerns 16 about the physical conditions of the user 90 will be described in detail below.

### (Server)

As shown in FIG. 3, the server 2 is equipped with a second control unit 2a, and a first storage unit 2b. Further, the server 2 is equipped with a second input reception unit 2c, a second display unit 2d, and a second communication unit 2e. Note that the "second control unit 2a" and the "first storage unit 2b" are examples of the "control unit" and the "storage unit" recited in claims, respectively.

The first storage unit 2b stores various kinds of programs to be executed by the second control unit 2a. Further, the first storage unit 2b is configured to store the user 90 (see FIG. 1) and the guardian 91 (see FIG. 1) in an associated manner. Specifically, the first storage unit 2b stores the information 11 on the user 90 and the information 12 on the guardian 91 in an associated manner, thereby storing the user 90 and the guardian 91 in an associated manner. Further, the first storage unit 2b is configured to store the route information 10 input by the guardian 91. The route information 10 includes the information 10a on the departure point and the information 10b on the destination point when the user 90 is transported, and the departure date and time information 10c which is information on the date and time information when the user 90 leaves the departure point, which were input by the guardian 91 with the terminal 1 (see FIG. 1). The first storage unit 2b is configured to store, as route information 10, the information 10a on the departure point, the information 10b on the destination point, and the departure date and time information 10c.

The information 10a on the departure point is information that can identify the departure point, such as, e.g., the address of the departure point and the latitude and longitude of the departure point. Further, the information 10b on the destination point is information that can identify the destination point, such as, e.g., the address of the destination point and the latitude and longitude of the destination point. Furthermore, the information 10b on the destination point may include, for example, the telephone number of the facility at the destination point. The departure date and time information 10c includes the information on the date on which the user 90 will use the transportation vehicle 3, and the information on the departure time.

Further, the first storage unit 2b is configured to store in advance the information 14 on the belongings of the user 90, the information being input by the guardian 91 via the terminal 1. Further, the storage unit 2b is configured to store in advance the concerns 16 about the physical conditions of the user 90, the physical conditions being input by the guardian 91 via the terminal 1. Further, the first storage unit 2b stores the information on the return location of the transportation vehicle 3, which will be described later. The first storage unit 2b includes a non-volatile storage device, such as, e.g., an HDD (Hard Disk Drive) and an SSD (Solid State Drive).

The second control unit 2a is configured to control each part of the server 2 by executing various kinds of programs stored in the first storage unit 2b. Further, the second control unit 2a is configured to acquire the route information 10 and provide the user 90 with the transportation vehicle 3 (see FIG. 1) that can transport the user 90 without having the user 90 to drive. Further, the second control unit 2a is configured to provide the movement information 13 (see FIG. 1) on the user 90 so that the guardian 91 in a remote location can browse it. The second control unit 2a includes, for example, a processor, such as a CPU and circuitry, and a memory, such as a ROM and a RAM. The details of the configuration that the second control unit 2a provides the transportation vehicle 3 to the user 90 and the details of the configuration that the second control unit 2a provides the movement information 13 on the user 90 to the guardian 91 will be described below.

The second input reception unit 2c is configured to receive an operation input from the operator. The second input reception unit 2c includes, for example, an input device, such as, e.g., a mouse and a keyboard.

The second display unit 2d is configured to display various kinds of screens for the operator's operation of the server 2. The second display unit 2d includes, for example, an LCD monitor.

The second communication unit 2e is configured to be connectable to the terminal 1 (see FIG. 1) via the network 80 (see FIG. 1). Furthermore, the second communication unit 2e is configured to be connectable to the transportation vehicle 3 via the network 80. The second communication unit 2e includes an interface for wired communication or an interface for wireless communication.

Again referring to FIG. 1, as shown in FIG. 1, the server 2 is configured to receive the route information 10, the information 11 on the user 90, the information 12 on the guardian 91, the information on the belongings of the user 90, and the concerns 16 about the physical conditions of the user 90, which were transmitted from the terminal 1 via the network 80. Further, the server 2 is configured to transmit the movement information 13 on the user 90 and the information 15 on the physical conditions of the user 90 to the terminal 1 via the network 80. Further, the server 2 is configured to transmit the route information 10 and the information 14 on the belongings of the user 90 to the transportation vehicle 3 via the network 80. Furthermore, the server 2 is configured to receive, via the network 80, the movement information 13 on the user 90 and the information 15 on the physical conditions of the user 90 from the transportation vehicle 3.

### (Transportation Vehicle)

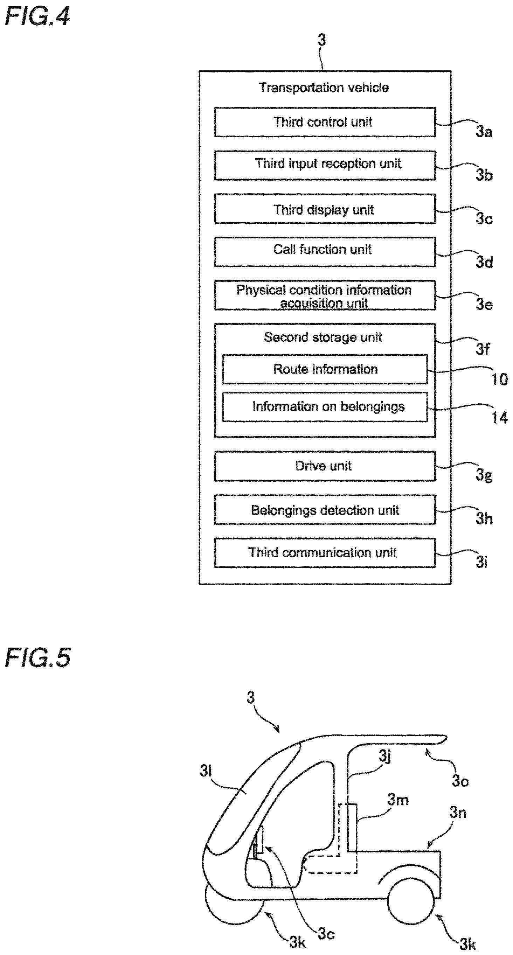

As shown in FIG. 4, the transportation vehicle 3 is equipped with a third control unit 3a, a third input reception unit 3b, and a third display unit 3c. Further, the transportation vehicle 3 is equipped with a call function unit 3d and a physical condition information acquisition unit 3e. Furthermore, the transportation vehicle 3 is equipped with a second storage unit 3f, a drive unit 3g, a belongings detection unit 3h, and a third communication unit 3i. Note that the "third display unit 3c" is one example of the "display unit" as recited in claims.

The third control unit 3a is configured to control each part of the transportation vehicle 3. Further, the third control unit 3a is configured to perform control to move the transportation vehicle 3 based on the route information 10 received from the server 2 (see FIG. 1) via the network 80 (see FIG. 1). In other words, the transportation vehicle 3 according to this embodiment is an autonomous vehicle. The third control unit 3a includes, for example, a processor, such as a CPU, or circuitry, and a memory, such as a ROM and a RAM.

The third input reception unit 3b is configured to accept inputs from the user 90 (see FIG. 1). The third input reception unit 3b includes, for example, an input device such as a touch pad.

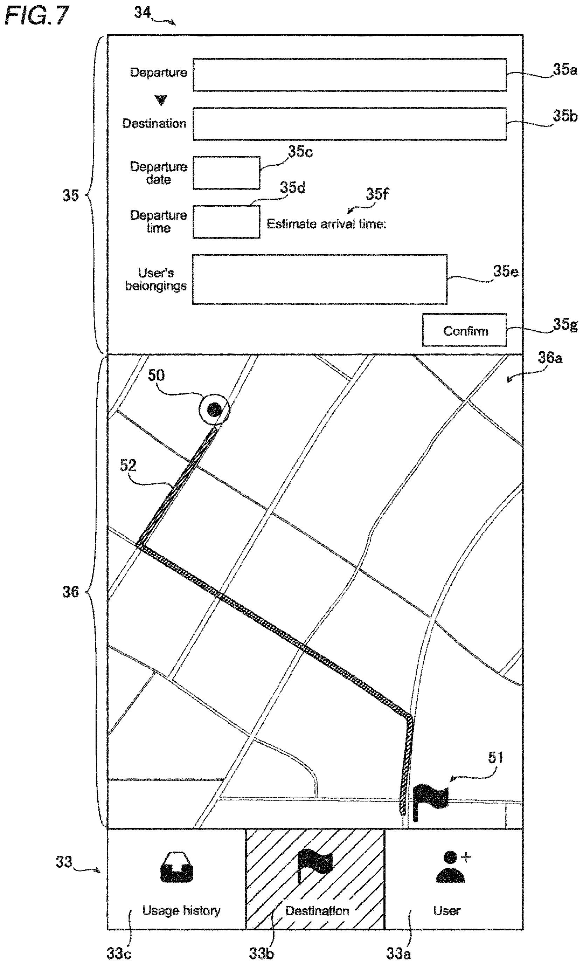

The third display unit 3c is configured to display a screen or the like showing information such as the route 52 (see FIG. 7) during the transportation to the user 90. The third display unit 3c includes, for example, an LCD monitor. Note that the third input reception unit 3b and the third display unit 3c may be integrally configured, for example, as a touch panel.

The call function unit 3d is provided in the transportation vehicle 3 and is configured to allow the user 90 to call the guardian 91 or the facility at the destination of the user 90. The call function unit 3d includes, for example, a call module.

The physical condition information acquisition unit 3e is configured to acquire the information 15 about the physical conditions of the user 90 when the user 90 is being transported by the transportation vehicle 3. The Information 15 about the physical conditions of the user 90 includes, for example, the body temperature, the pulse rate, the posture, the gaze, and the grip strength of the user 90. The physical condition information acquisition unit 3e includes various types of sensors capable of acquiring the body temperature, the pulse, the posture, the gaze, and the grip strength of the user 90. The various types of sensors include, for example, a temperature sensor, a pulse sensor, a camera capable of measuring the posture and the gaze of the user 90, and a pressure sensor.

The second storage unit 3f stores various kinds of programs to be executed by the third control unit 3a. Further, the second storage unit 3f is configured to store the route information 10 transmitted from the server 2 via the network 80 and the information 14 on the belongings of the user 90.

The drive unit 3g is configured to supply the driving force to the transportation vehicle 3 under the control of the third control unit 3a. The drive unit 3g includes, for example, an engine and/or a motor.

The belongings detection unit 3h is configured to detect the belongings of the user 90. The belongings detection unit 3h includes, for example, a sensor that detects an IC (Integrated Circuit) tag attached to the belongings of the user 90, a camera, or a weight sensor. The belongings detection unit 3h is configured to detect the belongings of the user 90 by reading the IC tag, processing the image, or detecting the weight.

The third communication unit 3i is configured to be connectable to the server 2 (see FIG. 1) via the network 80 (see FIG. 1). The third communication unit 3i includes an interface for wired communication or an interface for wireless communication.

As shown in FIG. 5, the transportation vehicle 3 is an autonomous vehicle that includes a vehicle main body 3j, a plurality of wheels 3k, a windshield 3l, a seat 3m, and a cargo bed 3n, and is capable of transporting (moving) one or two users 90 (see FIG. 1) and their belongings 90. Further, the third display unit 3c is provided at the position facing the seat 3m and is configured to display various types of information to the user 90 seated on the seat 3m. Further, above the cargo bed 3n, a roof 3o is provided. Therefore, it is possible to prevent the belongings of the user 90 placed on the cargo bed 3n from getting wet due to rain, etc. Note that the transportation vehicle 3 includes a plurality of vehicles and is stored at a predetermined storage location.

Again referring to FIG. 1, as shown in FIG. 1, the transportation vehicle 3 is configured to receive the route information 10 and the information 14 on the belongings of the user 90 from the server 2 via the network 80. Furthermore, the transportation vehicle 3 is configured to transmit the movement information 13 on the user 90 and the information 15 on the physical conditions of the user 90 to the server 2 via the network 80.

Here, in the case where the user 90 is an aged person or a dementia patient, it may be difficult for the user 90 to request the provision of the transportation vehicle 3 by themselves because the user is not familiar with the handling of the terminal to perform the operation to request the provision of the transportation vehicle 3. Therefore, in this embodiment, the transportation service provision system 100 is configured such that the guardian 91 can request the provision of the transportation vehicle 3 instead of the user 90.

The provision of the service by the transportation service provision system 100 begins with the guardian 91 registering (storing) the information 11 on the user 90 and the route information 10, etc., in the server 2. And the server 2 provides the transportation vehicle 3 to the user 90 based on the various types of information registered by the guardian 91.

### (Registration of Information by Guardian)

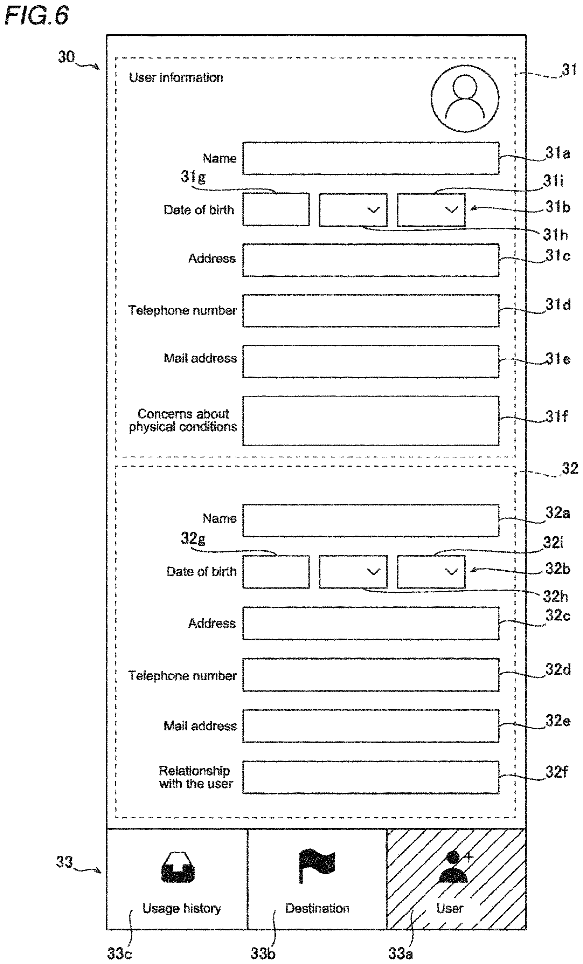

Referring to FIG. 6 and FIG. 7, the configuration in which the guardian 91 (see FIG. 1) registers the route information 10 (see FIG. 1), the information 11 (see FIG. 1) on the user 90, and the information 12 on the guardian 91 (see FIG. 1) to the server 2 (see FIG. 1) will be described.

### (Input of Information on User and Information on Guardian)

First, referring to FIG. 6, the configuration of the server 2 storing various types of information input by the guardian 91 via the terminal 1 in the first storage unit 2b (see FIG. 3) will be described.

FIG. 6 shows the input screen 30 displayed on the terminal 1 when the guardian 91 inputs the information 11 on the user 90 and the information 12 on the guardian 91. In this embodiment, the information 11 on the user 90 includes, for example, the name, the date of birth, the address, telephone number, and the e-mail address of the user 90. Further, the information 12 on the guardian 91 includes the name, the date of birth, the address, the telephone number, and the e-mail address of the guardian 91, as well as the relationship between the guardian 91 and the user 90.

As shown in FIG. 6, the input screen 30 includes a region 31 for inputting the information 11 on the user 90 and a region 32 for inputting the information 12 on the guardian 91. Further, the input screen 30 includes a region 33 for displaying tabs to switch screens to be displayed.

The region 31 for inputting the information 11 on the user 90 includes the first input field 31a to the sixth input field 31f.

The first input field 31a is an input field for inputting the name of the user 90. Further, the second input field 31b is an input field for inputting the date of birth of the user 90. The second input field 31b includes a year input field 31g, a month input field 31h, and a date input field 31i for inputting the Year, Month, and Date of birth of the user 90, respectively.

Further, the third input field 31c is an input field for inputting the address of the user 90. Further, the fourth input field 31d is an input field for inputting the telephone number of the user 90. Further, the fifth input field 31e is an input field for inputting the email address of the user 90.

Further, the sixth input field 31f is an input field for inputting the concerns 16 (see FIG. 3) regarding the physical conditions of the user 90. The concerns 16 regarding the physical conditions of the user 90 include, for example, information on the pre-existing medical conditions, injuries, etc., of the user 90.

The region 32 for inputting the information 12 on the guardian 91 includes the first input field 32a to the sixth input field 32f.

The first input field 32a is an input field for inputting the name of the guardian 91. Further, the second input field 32b is an input field for inputting the date of birth of the guardian 91. The second input field 32b includes a year input field 32g, a month input field 32h, and a date input field 32i for inputting the Year, Month, and Date of birth of the guardian 91, respectively.

Further, the third input field 32c is an input field for inputting the address of the guardian 91. Further, the fourth input field 32d is an input field for inputting the telephone number of the guardian 91. Further, the fifth input field 32e is an input field for inputting the email address of the guardian 91. Further, the sixth input field 32f is an input field for inputting the relationship between the user 90 and the guardian 91.

Based on the transmission operation by the guardian 91, the first control unit 1a (see FIG. 2) transmits to the server 2 the information 11 on the user 90 input in the region 31 for inputting the information 11 on the user 90 and the information 12 on the guardian 91 input in the region 32 for inputting the information 12 on the guardian 91. Note that the transmission operation by the guardian 91 is, for example, an operation for the guardian 91 to touch the transmit button (not shown) displayed on the input screen 30.

The server 2 is configured to store the information 11 on the user 90 and the information 12 on the guardian 91 transmitted from the terminal 1 in the first storage unit 2b with the information on the user 90 and the information on the guardian 91 associated with each other, in the first storage unit 2b. Specifically, the server 2 stores the information 11 on the user 90 and the information 12 on the guardian 91 in an associated manner in the first storage unit 2b by generating a data table or the like in which the information 11 on the user 90 and the information 12 on the guardian 91 are associated.

Note that the input screen 30 may be configured to allow an input of a payment method for a service provided by the transportation service provision system 100. In this case, the payment method may be input so that the user makes a payment each time the user uses a service provided by the transportation service provision system 100, or the user makes a payment for the service fee for a predetermined period of time. In other words, the service provided by the transportation service provision system 100 may be a so-called subscription service.

The server 2 stores the payment method input on the input screen 30 in the first storage unit 2b.

As shown in FIG. 6, a first tab 33a to a third tab 33c are displayed in the region 33 for displaying tabs for switching screens to be displayed.

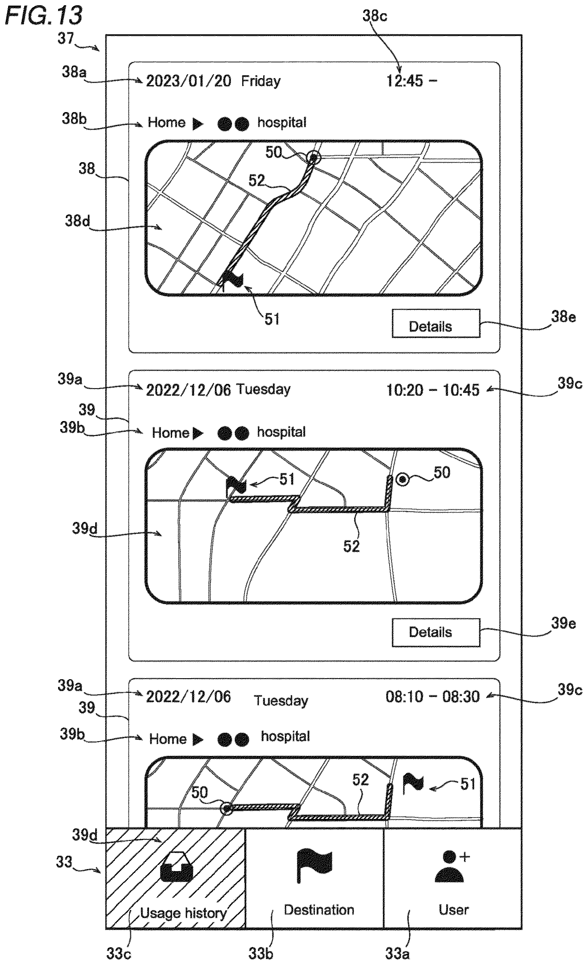

The first tab 33a is a tab for displaying the input screen 30 for inputting the information 11 on the user 90 and the information 12 on the guardian 91. Further, the second tab 33b is a tab for displaying the route input screen 34 (see FIG. 7), which is described below, for inputting the route information 10 (see FIG. 3). Further, the third tab 33c is a tab for displaying the browsing screen 37 (see FIG. 13), which is described below, for the guardian 91 to browse the movement information 13 on the user 90.

The first control unit 1a is configured to perform control to display a screen corresponding to the tab selected by the guardian 91 out of the first tab 33a to the third tab 33c. Further, the first control unit 1a is configured to display the tab selected by the guardian 91 out of the first tab 33a to the third tab 33c so as to be distinguishable from unselected tabs. In FIG. 6, for convenience, hatching is applied to the first tab 33a to indicate that the first tab 33a is in the selected state.

### (Input of Route Information)

Next, referring to FIG. 7, the configuration for inputting route information 10 (see FIG. 3) at the terminal 1 (see FIG. 1) will be described.

In this embodiment, the route information 10 includes the information 10a (see FIG. 3) on the departure point and the information 10b (see FIG. 3) on the destination point when the user 90 (see FIG. 1) is transported, and the departure date and time information 10c (see FIG. 3), which is the information on the date and time when the user 90 departs from the departure point.

FIG. 7 shows a route input screen 34 displayed on the first display unit 1c (see FIG. 2) when the guardian 91 (see FIG. 1) inputs the route information 10 at the terminal 1.

The route input screen 34 includes a region 35 for displaying an input field for the route information 10, a region 36 for displaying a route 52 based on the input route information 10, and a region 33 for displaying tabs for switching screens to be displayed. In the example shown in FIG. 7, for convenience, hatching is applied to the second tab 33b to indicate that the second tab 33b is selected.

In the region 35 for displaying the input fields of the route information 10, a first input field 35a to a fifth input field 35e, an estimated arrival time display field 35f, and a confirm button 35g are displayed.

The first input field 35a is an input field for inputting the information 10a on the departure point. Further, the second input field 35b is an input field for inputting the information 10b on the destination point. Further, each of the third input field 35c and the fourth input field 35d is an input field for inputting the departure date and time information 10c. Specifically, the third input field 35c is an input field for inputting the information on the departure date. In this embodiment, the information on the departure date to be input to the third input field 35c is the date on which the user 90 will use the transportation vehicle 3. Further, the fourth input field 35d is an input field for inputting the information on the departure time.

Further, the fifth input field 35e is an input field for inputting the information 14 (see FIG. 1) on the belongings of the user 90. The information 14 on the belongings of the user 90 includes, for example, information on the belongings essential for the user 90 to go to the destination point. For example, in the case where the destination point of the user 90 is a medical institution, the belongings essential for the user 90 to go to the destination point are, for example, an insurance card, a medication book, and so on. Further, for example, in the case where the destination point for the user 90 is a farm owned by the user 90, it is information on drinks, medications taken on a regular basis, and so on.

The confirm button 35g is an operation button of the GUI (Graphical User Interface) displayed on the route input screen 34. When the confirm button 35g is pressed, the information input to the first input field 35a to the fifth input field 35e is transmitted to the server 2 (see FIG. 1). Specifically, the first control unit 1a (see FIG. 2) transmits the information input in the first input field 35a to the fifth input field 35e to the server 2 via the network 80 (see FIG. 1) when the confirm button 35g is pressed by the guardian 91.

The server 2 determines the route 52 and acquires the estimated arrival time based on the route information 10 transmitted from the terminal 1. Specifically, the second control unit 2a (see FIG. 4) is configured to set the movement route 52 of the user 90 based on the information 10a on the departure point, the information 10b on the destination point, and the departure date and time information 10c. Further, the second control unit 2a generates a map 36a displaying the route 52 determined based on the route information 10. The second control unit 2a transmits the generated map 36a and the acquired estimated arrival time to the terminal 1 via the network 80. Further, the second control unit 2a performs control to store the route information 10 in the first storage unit 2b (see FIG. 3).

As shown in FIG. 7, the first control unit 1a displays the map 36a received from the server 2 in the region 36 for displaying the route based on the input route information 10.

The map 36a identifiably shows the mark 50 indicating the departure point, the marker 51 indicating the destination point, and the route 52 from the departure point to the destination point. In the example shown in FIG. 7, a double circle mark is illustrated at the departure point as the mark 50. Further, as marker 51, a mark of a flag is illustrated at the destination point. Further, hatching is applied to the route 52 so that the route 52 is identifiable.

By configuring as described above, the guardian 91 can easily visually grasp the route 52 set based on the route information 10.

Further, the first control unit 1a displays the estimated arrival time acquired from the server 2 in the estimated arrival time display field 35f.

In this embodiment, the second control unit 2a (see FIG. 3) performs control to move the transportation vehicle 3 (see FIG. 1) to meet the departure date and time included in the route information 10 input by the guardian 91 and stored in the first storage unit 2b. In other words, the second control unit 2a performs control to acquire the time required to go from the location where the transportation vehicle 3 is stored to the departure point based on the information 10a on the departure point included in the route information 10 and the departure date and time information 10c, and move the transportation vehicle 3 to the departure point by the departure date and time. In other words, the second control unit 2a is configured to perform control to automatically move the transportation vehicle 3 to the departure point of the user 90 based on the information 10a on the departure point and the departure date and time information 10c.

### (Transportation Vehicle)

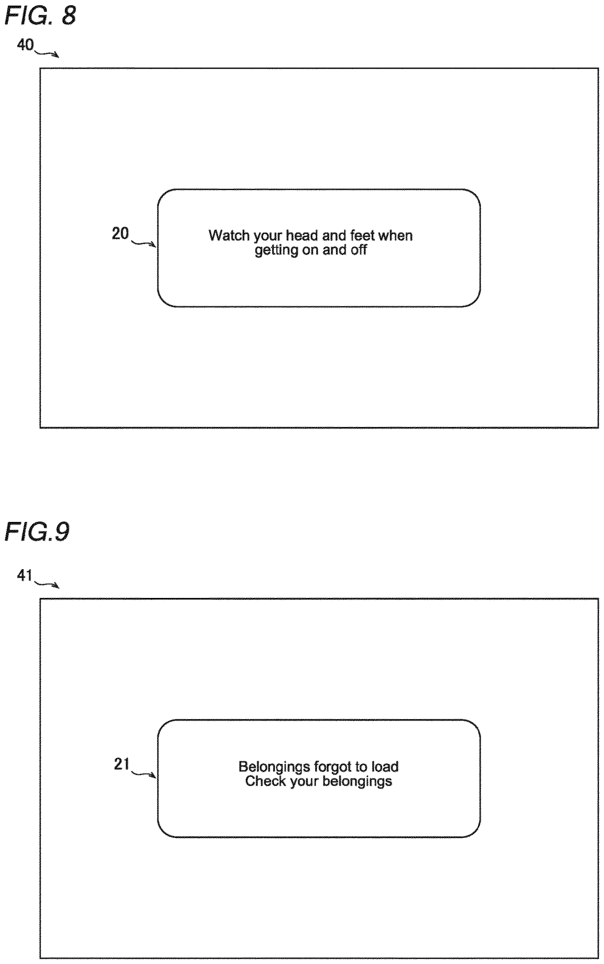

Referring now to FIG. 8 to FIG. 12, the configuration of displaying information to the user 90 when the user 90 (see FIG. 1) is transported by the transportation vehicle 3 (see FIG. 1) will be described.

### (Display of Caution Notice Information)

The user 90 gets into the transportation vehicle 3 that has been moved to the departure point at the departure time. In this embodiment, the second control unit 2a (see FIG. 3) is configured to notify the user 90, who is an aged person or dementia patient, of information to prevent a fall or the like from occurring when the user 90 gets into the transportation vehicle 3. Specifically, as shown in FIG. 8, the second control unit 2a is configured to control the notification of caution notice information 20 on the user 90 when getting in and out of the transportation vehicle 3.

As shown in FIG. 8, the second control unit 2a generates a screen 40. The screen 40 is a screen for displaying caution notice information 20 to be displayed on the third display unit 3c (see FIG. 4) provided in the transportation vehicle 3. The second control unit 2a then transmits the generated screen 40 to the transportation vehicle 3 via the network 80 (see FIG. 1).

The transportation vehicle 3 displays the screen 40 received via the network 80 on the third display unit 3c. Specifically, the third control unit 3a performs control to display the received screen to the third display unit 3c. With this, the screen 40 displaying the caution notice information 20 is displayed to the user 90. Note that the third control unit 3a may display the received screen 40 on the third display unit 3c and may also provide a caution notice to the user 90 using voice and/or light.

### (Notification of Forgotten to Load Belongings)

Further, in the case where the information 14 on the belongings of the user 90 is stored in the first storage unit 2b, the second control unit 2a (see FIG. 3) is configured to notify the user 90 that the user has forgotten to load their belongings.

Specifically, as shown in FIG. 9, the second control unit 2a is configured to determine whether the user 90 (see FIG. 1) has forgotten to load the belongings of the user 90 (see FIG. 1) onto the transportation vehicle 3 (see FIG. 1), based on the information 14 (see FIG. 3) on the belongings of the user 90 (see FIG. 1) stored in the first storage unit 2b (see FIG. 3).

More specifically, the second control unit 2a determines whether the belongings of the user 90 detected by the belongings detection unit 3h (see FIG. 4) provided in the transportation vehicle 3 and the information 14 on the belongings of the user 90 stored in the first storage unit 2b are consistent. More specifically, in the case where the belongings of the user 90 detected by the belongings detection unit 3h (see FIG. 4) provided in the transportation vehicle 3 and the information 14 on the belongings of the user 90 stored in the first storage unit 2b are consistent, the second control unit 2a determines that the user 90 has not not forgotten to load their belongings. Further, in the case where the belongings of the user 90 detected by the belongings detection unit 3h provided in the transportation vehicle 3 and the information on the belongings of the user 90 stored in the first storage unit 2b 14 do not match, the second control unit 2a determines that the user 90 has forgotten to load their belongings.

When the user 90 has forgotten to load their belongings, the second control unit 2a is configured to display a message on the third display unit 3c (see FIG. 4). Specifically, the second control unit 2a generates a screen 41, as shown in FIG. 9, that displays information 21 indicating that the user 90 has forgotten to load their belongings. And the second control unit 2a transmits to the transportation vehicle 3 via the network 80 (see FIG. 1) a screen 41 displaying information indicating that the user 90 has forgotten to load their belongings 21.

The transportation vehicle 3 displays a screen 41 displaying the information 21 indicating that the user 90 has forgotten to load their belongings, which was received via the network 80, on the third display unit 3c. Specifically, the third control unit 3a (see FIG. 4) performs control to cause the third display unit 3c to display a screen 41 displaying information 21 indicating that the user 90 has forgotten to load their belongings. Note that the third control unit 3a may display the received screen 41 on the third display unit 3c and may also notify the user 90 that the user has forgotten to load belongings, using voice and/or light, etc.

Thereafter, the user 90 gets into the transportation vehicle 3 and performs the departure initiation operation. The third control unit 3a performs control to start moving from the departure point to the destination point upon receiving an operation input of initiating departure. Note that the third control unit 3a may be configured to determine by image processing that the user 90 has been boarded, and when it is determined that the user 90 has been boarded, and perform control to automatically initiate the movement of the transportation vehicle 3.

### (Display of Movement route)

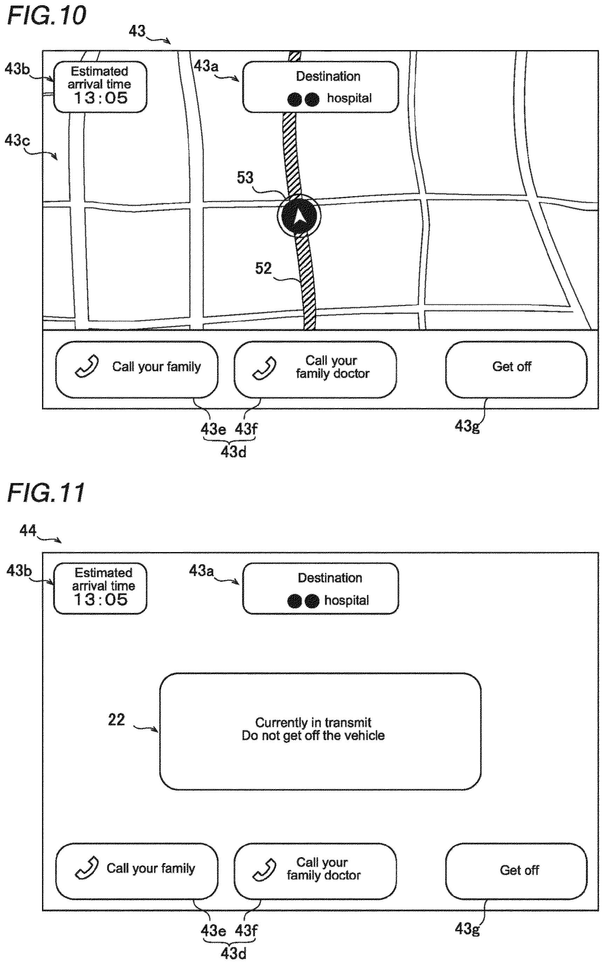

In this embodiment, the third control unit 3a (see FIG. 4) is configured to perform control to display the movement route 52 (see FIG. 10) to the user 90 (see FIG. 1) while the user 90 (see FIG. 1) is being transported.

Specifically, as shown in FIG. 10, the third control unit 3a displays the movement route 52 to the user 90 by displaying the screen 43 showing the movement route 52 on the third display unit 3c (see FIG. 4).

The screen 43 showing the movement route 52 displays the information 43a on the destination (destination point), the estimated arrival time 43b, and the map 43c displaying the movement route 52 to the destination point.

The map 43c identifiably displays the route 52 to the destination point and the current location point of the user 90. Specifically, the third control unit 3a displays a mark 53 indicating the current location on the map 43c. The mark 53 indicating the current location changes in real time, depending on the location of the user 90. Therefore, the user 90 can easily grasp the current location in the route 52. Note that in the example shown in FIG. 10, for convenience, the route 52 is indicated by hatching on the route 52 so that it can be identified.

### (Call Function)

Further, in this embodiment, the third display unit 3c (FIG. 4) is configured to display the call initiation operation unit 43d, which is an operation unit for initiating a call by the call function unit 3d (FIG. 4). Specifically, the third control unit 3a is configured to perform control to display the call initiation operation unit 43d on the screen 43.

The call initiation operation unit 43d includes a first call initiation operation unit 43e for initiating a call with the guardian 91 of the user 90 and a second call initiation operation unit 43f for initiating a call with a facility at the destination point.

When the first call initiation operation unit 43e is pressed, the third control unit 3a initiates a call with the guardian 91 of the user 90 based on the information 12 on the guardian 91 stored in the second storage unit 3f (see FIG. 4).

Further, in the case where the second call initiation operation unit 43f is pressed, the third control unit 3a initiates a call with the facility at the destination point based on the information 10b on the destination point stored in the second storage unit 3f (see FIG. 4).

Note that the third control unit 3a may be configured to initiate a call with voice only or a video call with voice and images when the call initiation operation unit 43d is operated.

Further, the third control unit 3a is configured to display a get-off button 43g on the screen on the screen 43. When the get-off button 43g is operated (pressed), the third control unit 3a performs control to stop the transportation vehicle 3 at a position where it can stop, after checking the safety of the surroundings. This allows the transportation vehicle 3 to stop safely when the physical conditions of the user 90 become bad, or when the user 90 needs to go to a restroom, for example.

### (Display of Information to Restrain Get-Off)

Note that when the user 90 is a dementia patient, there is a possibility that the user 90 will try to get off the transportation vehicle 3 in a state in which the get-off button 43g is not pressed while the transportation vehicle 3 is moving. Therefore, in this embodiment, as shown in FIG. 11, the second control unit 2a (see FIG. 1) is configured to perform control to notify the user 90 of the information 22 that inhibits the user from getting off the transportation vehicle 3 (see FIG. 1) while the vehicle is moving.

Specifically, the second control unit 2a generates a screen 44 displaying the information 22 inhibiting the user from getting out of the transportation vehicle 3. And the second control unit 2a transmits the screen 44 displaying the information 22 inhibiting the user from getting off the transportation vehicle 3 to the transportation vehicle 3 via the network 80 (see FIG. 1).

The transportation vehicle 3 displays the screen 44 transmitted from the second control unit 2a via the network 80 (see FIG. 1) on the third display unit 3c (see FIG. 4). Specifically, the third control unit 3a (see FIG. 4) performs control to display the received screen 44 on the third display unit 3c. With this, it is possible to notify the user 90 of the information 22 restraining the user from getting off the transportation vehicle 3 while it is being transported by the transportation vehicle 3. Note that the third control unit 3a may display the received screen 44 on the third display unit 3c and may also notify the user 90 to inhibit the getting off the vehicle by voice and/or light.

The third control unit 3a stops the transportation vehicle 3 when it arrives at the destination point. The user 90 then gets off the transportation vehicle 3. Note that the third control unit 3a transmits the movement information 13 on the user 90 to the server 2 at predetermined intervals while the transportation vehicle 3 is moving. Specifically, the third control unit 3a transmits the location information on the transportation vehicle 3 acquired by the GPS (Global Positioning System) to the server 2 as the movement information 13 on the user 90. Further, the third control unit 3a transmits the information 15 on the physical conditions of the user 90 acquired by the physical condition information acquisition unit 3e to the server 2 while the user is being transported by the transportation vehicle 3.

The server 2 stores the movement information 13 on the user 90 transmitted from the transportation vehicle 3 in the first storage unit 2b. Further, the server 2 stores the information 15 on the physical conditions of the user 90 transmitted from the transportation vehicle 3 in the first storage unit 2b. In other words, the second control unit 2a stores the movement information 13 on the user 90 when the user 90 is transported from the departure point to the destination point and the information 15 on the physical conditions of the user 90 during the transportation service, in association with each time the user 90 uses the service.

### (Notification of Forgotten to Unload Belongings)

Note that in the case where the user 90 is an aged person or a dementia patient, it is conceivable that the user 90 may forget to unload their belongings loaded onto the transportation vehicle 3. Therefore, in this embodiment, it is configured to notify the user 90 that the user has forgotten to unload their belongings.

Specifically, the second control unit 2a is configured to determine whether the belongings of the user 90 have been unloaded from the transportation vehicle 3 based on the information 14 (see FIG. 3) on the belongings of the user 90 stored in the first storage unit 2b. Further, the second control unit 2a is configured to display a message indicating that the user 90 has forgotten to unload their belongings on the third display unit 3c.

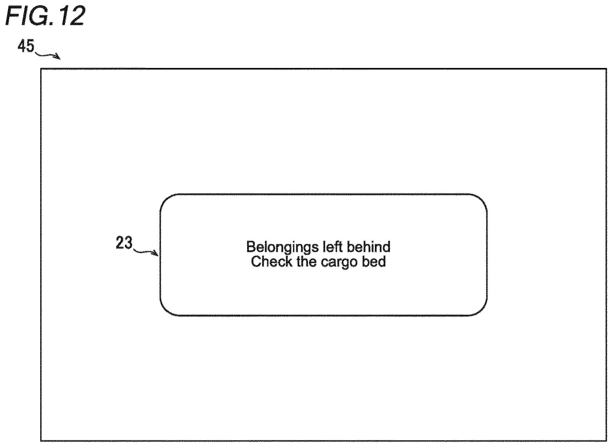

As shown in FIG. 12, the second control unit 2a (see FIG. 3) notifies the user 90 (see FIG. 1) of the information 23 that the user has forgotten to unload their belongings. Specifically, the second control unit 2a generates a screen 45 displaying the information 23 indicating that the belongings have been forgotten to be unloaded. Further, the second control unit 2a transmits the generated screen 45 to the transportation vehicle 3 via the network 80 (see FIG. 1).

The transportation vehicle 3 displays the screen 45 received via the network 80 on the third display unit 3c (see FIG. 4). Specifically, the third control unit 3a (see FIG. 4) is configured to perform control to display the received screen 45 on the third display unit 3c. Note that the third control unit 3a may display the received screen 45 on the third display unit 3c and may also notify the user 90 that the user has forgotten to load belongings, using voice and/or light, etc.

In this embodiment, the second control unit 2a is configured to perform control to automatically move the transportation vehicle 3 to a predetermined return location when the transportation of the user 90 has been completed. Specifically, the information on the return location is stored in advance in the first storage unit 2b (see FIG. 3), and the second control unit 2a performs control to automatically move the transportation vehicle 3 to the return location based on the information on the return location stored in the first storage unit 2b.

Here, there is a need for the guardian 91 in a remote location to know whether the user 90 has been transported based on the information registered in advance.

### (Display of Movement Information)

Therefore, in this embodiment, the second control unit 2a is configured to provide a screen displaying the movement information 13 on the user 90 so that the guardian 91 in the remote location can browse the screen on the terminal 1.

Specifically, as shown in FIG. 13, the second control unit 2a (see FIG. 3) generates a browsing screen 37 displaying the movement information 13 (see FIG. 1) on the user 90 (see FIG. 1). Further, the second control unit 2a transmits the browsing screen 37 to the terminal 1 (see FIG. 1) based on the request of the guardian 91 (see FIG. 1), which is input from the terminal 1 (see FIG. 1). Note that the second control unit 2a is configured to acquire the correspondence relationship between the user 90 and the guardian 91 based on the information 11 on the user 90 input to the guardian 91 by the terminal 1 and stored in the first storage unit 2b. And, the second control unit 2a is configured to provide the browsing screen 37 displaying the movement information 13 on the user 90 to the guardian 91 in the remote location, based on the acquired correspondence relationship between the user 90 and the guardian 91.

Further, in this embodiment, as shown in FIG. 13, the second control unit 2a is configured to provide the movement information 13 in real time during the transportation of the user 90, or the movement information 13 including the usage history of the user 90 after the completion of the movement, to the guardian 91 in the remote location.

The browsing screen 37 shown in FIG. 13 includes the region 38 displaying the real-time movement information 13 and the region 39 displaying the movement information 13 including the usage history after completion of the transportation of the user 90.

As shown in FIG. 13, in the region 38 displaying the real-time movement information 13, the following information is displayed: the information 38a on the date and the day of the week that the user 90 is being transported; the information on the departure point and the destination point 38b; the information on the movement start time 38c; the map 38d showing the route 52 along which the user 90 is being transported; and the detail button 38e.

Further, as shown in FIG. 13, in the region 39 displaying the movement information 13 including the movement history, the following information is displayed: the information 39a on the date and the day of the week when the user 90 was transported; the information 39b on the departure point and the destination point; the information 39c on the movement start time and the movement end time; the map 39d showing the route 52 along which the user 90 was transported; and the detail button 39e.

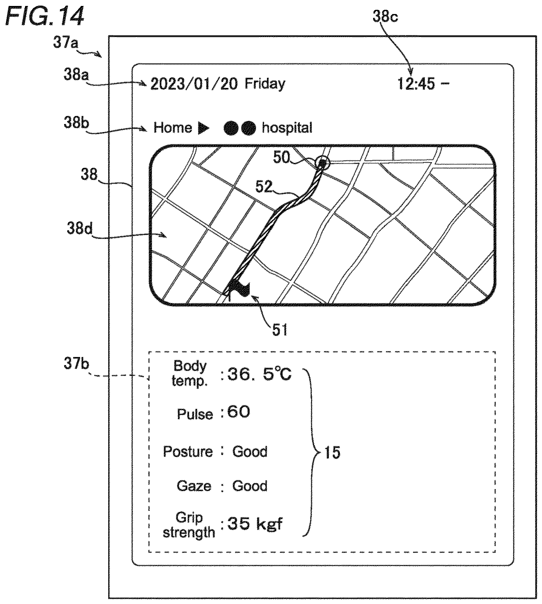

The detail button 38e and the detail button 39e are GUI buttons. The second control unit 2a is configured to perform control to display a detailed browsing screen 37a (see FIG. 14), which will be described later, when the detail button 38e or the detail button 39e is pressed.

The second control unit 2a generates the browsing screen 37 based on the route information 10 (see FIG. 4) stored in the first storage unit 2b (see FIG. 3), the departure date and time information 10c (see FIG. 4), and the movement information 13 on the user 90 transmitted from the transportation vehicle 3. When the user 90 is being transported, the second control unit 2a generates the browsing screen 37 in real time. Further, in the case where the movement history of the user 90 has been stored in the first storage unit 2b, the second control unit 2a generates a browsing screen 37 including a region 39 that displays the movement information 13 including the movement history. Further, in the case where there are multiple usage histories, the second control unit 2a generates a browsing screen 37 including a region 39 for each of the movement histories of the user 90. Further, the second control unit 2a transmits the generated browsing screen 37 to the terminal 1 (see FIG. 1) via the network 80 (see FIG. 1).

Note that when an operation input to confirm the movement information 13 is received from the guardian 91 via the terminal 1, the second control unit 2a is configured to generate the browsing screen 37 and transmit the browsing screen 37 to the terminal 1. Note that even in the case where no operation input to confirm the movement information 13 has been received from the terminal 1, the second control unit 2a may be configured to generate the browsing screen 37 and transmit it to the terminal 1 when the transportation of the user 90 starts.

The terminal 1 displays the browsing screen 37 transmitted via the network 80 on the first display unit 1c. Specifically, the first control unit 1a (see FIG. 1) performs control to make the browsing screen 37 display the browsing screen on the first display unit 1c.

### (Display of Information on Physical Conditions of User)

In this embodiment, the second control unit 2a is configured to provide the information 15 on the physical conditions of the user 90 during the movement to the guardian 91 in the remote location. Specifically, as shown in FIG. 14, the second control unit 2a (see FIG. 3) provides the information 15 on the physical conditions of the user 90 (see FIG. 1) during the transportation to the guardian 91 (see FIG. 1) in the remote location by displaying the detailed browsing screen 37a on the terminal 1.

The detailed browsing screen 37a is a screen to be displayed on the terminal 1 when the detail button 38e (see FIG. 13) or the detail button 39e (see FIG. 13) is pressed. The example shown in FIG. 14 shows the detailed browsing screen 37a when the detail button 38e is pressed.

The browsing screen 37a shown in FIG. 13 includes the region 38 displaying the real-time movement information 13 and the region 37b displaying the information 15 regarding the body conditions of the user 90. In the example shown in FIG. 14, in the region 37b, the body temperature, the pulse rate, the posture, the gaze, and the grip strength of the user 90 are displayed as the information 15 regarding the physical conditions of the user 90.

The second control unit 2a generates the detailed browsing screen 37a, based on the movement information 13 on the user 90 transmitted from the transportation vehicle 3 (see FIG. 1), the information 15 on the physical condition of the user 90, the route information 10 stored in the first storage unit 2b, and the departure date and time information 10c.

Note that in this embodiment, the second control unit 2a is configured to provide the information 15 on the physical conditions of the user 90 during the transportation to the guardian 91 in the remote location, based on the concerns 16 regarding the physical conditions of the user 90 stored in the first storage unit 2b and the information 15 on the physical condition information acquisition unit 3e (see FIG. 5) acquired by the physical condition information acquisition unit 3e (see FIG. 5). In other words, the second control unit 2a generates the detailed browsing screen 37a displaying the predetermined information among the information 15 on the physical conditions of the user 90 acquired by the physical condition information acquisition unit 3e, based on the information included in the concerns 16.

For example, in the case where as concerns 16 about the physical conditions of the user 90, there is a possibility that the user 90 has a cold, the second control unit 2a generates the detailed browsing screen 37a that displays information on the body temperature, the posture, and the gaze, among the information 15 about the physical conditions of the user 90. Further, the second control unit 2a transmits the generated detailed browsing screen 37a to the terminal 1 via the network 80 (see FIG. 1).

The terminal 1 displays the detailed browsing screen 37a received via the network 80 on the first display unit 1c (see FIG. 2). Specifically, the first control unit 1a (see FIG. 1) performs control to display the received detailed browsing screen 37a on the first display unit 1c.

Note that when the detail button 39e is pressed, the second control unit 2a generates the detailed browsing screen 37a based on the route information 10, the departure date and time information 10c, the movement information 13 on the user 90, and the information about the physical conditions of the user 90 15, which are stored in the first storage unit 2b.

### (Transportation Service Provision Processing)

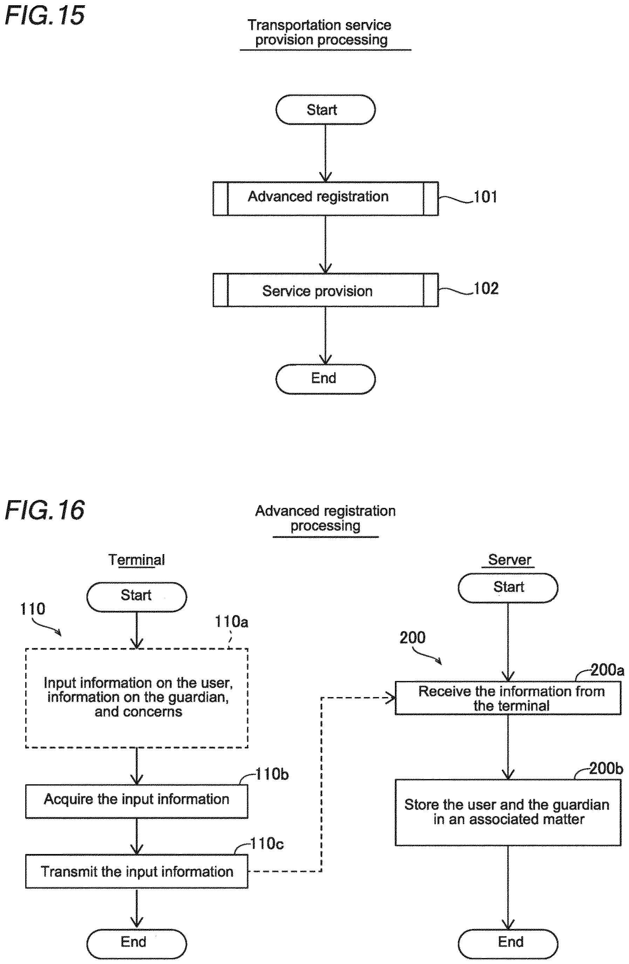

Next, referring to FIG. 15 to FIG. 17, the transportation service provision method in which the transportation service provision system 100 (see FIG. 1) according to this embodiment provides a transportation service to the user 90 (see FIG. 1) will be described.

As shown in FIG. 15, the transportation service provision method by the transportation service provision system 100 (see FIG. 1) includes, roughly, a step 101 of pre-registering information on the user 90 (see FIG. 1) such as the information 11 (see FIG. 1) on the server 2 (see FIG. 1), and a step 102 of providing the user 90 with the transportation vehicle 3 (see FIG. 1).

### (Pre-registration Processing)

First, referring to FIG. 16, the pre-registration processing (the processing in Step 101 (see FIG. 15)) in the transportation service provision system 100 (see FIG. 1) will be described. The processing in Step 101 is largely divided into two steps: Step 110 by the terminal 1 (see FIG. 1) and Step 200 by the server 2 (see FIG. 1). Note that in FIG. 16, the steps performed by a person (guardian 91) are illustrated with dashed lines.

Step 110 includes Step 110a for the guardian 91 to input the information 11 (see FIG. 1) on the user 90, the information 12 (see FIG. 1) on the guardian 91, and the concerns 16 (see FIG. 1) regarding the physical conditions of the user 90, Step 110b for the terminal 1 to acquire the information input by the guardian 91, and Step 110c of transmitting the information acquired by terminal 1 to the server 2.

In Step 110a, the guardian 91 inputs the information 11 on the user 90, the information 12 on the guardian 91, and the concerns 16 about the physical conditions of the user 90.

In Step 110b, the terminal 1 acquires the information 11 on the user 90 input by the guardian 91, the information 12 on the guardian 91, and the concerns 16 about the physical conditions of the user 90.

In Step 110c, the terminal 1 transmits the information 11 on the user 90, the information 12 on the guardian 91, and the concerns 16 about the physical conditions of the user 90 to the server 2 via the network 80 (see FIG. 1). Thereafter, the processing in Step 110 by the terminal 1 is completed.

Next, the processing moves to Step 200 by the server 2. Step 200 includes Step 200a for the server 2 to receive information from the terminal 1 and Step 200b of storing stores the received information.

In Step 200a, the server 2 receives the information 11 on the user 90, the information 12 on the guardian 91, and the concerns 16 about the physical conditions of the user 90, which are transmitted from the terminal 1 via the network 80.

In Step 200b, the server 2 stores the user 90 and the guardian 91 in an associated manner. In this embodiment, in the first storage unit 2b (see FIG. 3), the server 2 stores the user 90 and the guardian 91 in an associated manner in the form of a data table. Further, in Step 200b, the server 2 stores the information 11 on the user 90, the information 12 on the guardian 91, and the concerns 16 about the physical conditions of the user 90 in an associated manner in the first storage unit 2b. Thereafter, the processing by the server 2 in Step 200 is completed.

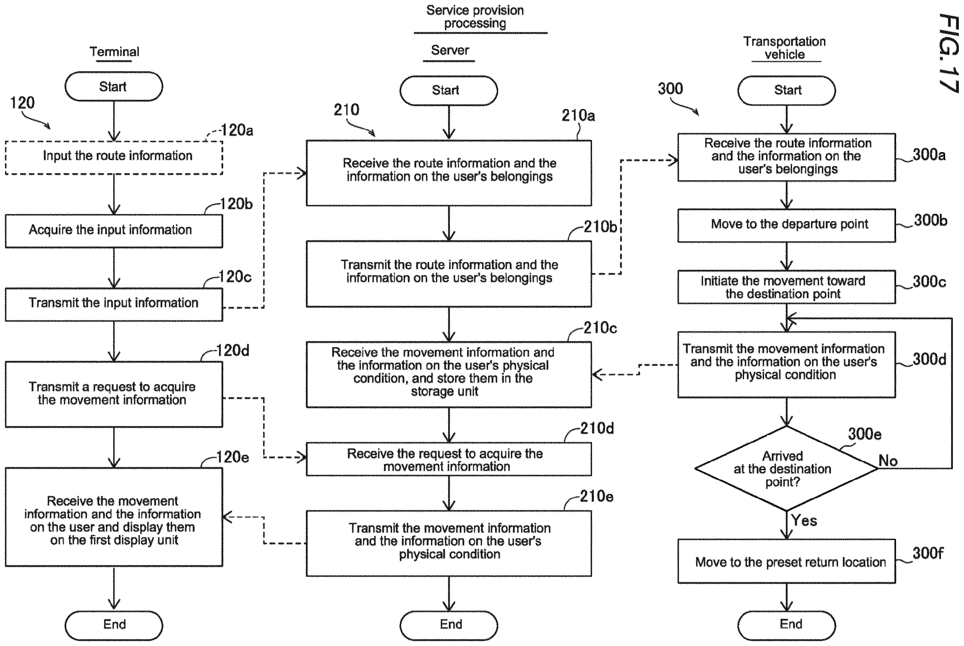

Next, referring to FIG. 17, the processing for the transportation service provision system 100 (see Step 102 (FIG. 15) to provide a service to the user 90 (see FIG. 1) by means of the transportation vehicle 3 (see FIG. 1) will be described. The processing in Step 102 includes, roughly, Step 120 by the terminal 1 (see FIG. 1), Step 210 by the server 2 (see FIG. 1), and Step 300 by the transportation vehicle 3. Note that in FIG. 17, the steps performed by a person (guardian 91) are illustrated with dashed lines.

Step 120 by the terminal 1 includes the processing from Step 120a to Step 120c of acquiring the information input by the guardian 91 and transmitting it to the server 2, and Step 120d and Step 120e of displaying the movement information 13 on the user 90 and the information 15 on the physical conditions about the user 90 based on a request by the guardian 91.

Further, the processing in Step 210 by the server 2 includes the processing in Step 210a and Step 210b to initiate the provision of the transportation vehicle 3 based on the information transmitted from the terminal 1, the processing in Step 210c to store the information transmitted by the transportation vehicle 3, and the processing in Step 210d and Step 210e to transmit the movement information 13 on the user 90 and information 15 on the physical conditions about the user 90 based on a request from the guardian 91.

Furthermore, the processing in Step 300 by the transportation vehicle 3 includes the processing in Step 300a to Step 300d to initiate the transportation based on the information transmitted from the server 2 and transport the user 90 while transmitting the movement information 13 on the user 90 and the information 15 on the physical conditions of the user 90, and the processing in Step 300e and Step 300f to complete the transportation to the destination point and return to the return location.

In Step 120a, the guardian 91 of the user 90 inputs the route information 10 when the user 90 is transported in advance by the guardian 91 of the user 90. Note that in this embodiment, in the processing in Step 120a, the guardian 91 inputs the information 14 (see FIG. 1) on the belongings of the user 90, as well.

In Step 120b, the terminal 1 acquires the information input by the guardian 91 in Step 120a. Specifically, the terminal 1 acquires the route information 10 and the information 14 on the belongings of the user 90.

In Step 120c, the terminal 1 transmits the information acquired in Step 120b to the server 2. Specifically, the terminal 1 transmits the route information 10 and the information 14 on the belongings of the user 90 to the server 2 via the network 80 (see FIG. 1).

Next, the processing moves to the server 2. That is, in Step 210a, the server 2 receives the route information 10. Note that in this embodiment, in Step 210a, the server 2 receives the route information 10 as well as the information 14 on the belongings of the user 90.

In Step 210b, the server 2 transmits the route information 10 and the information 14 on the belongings of the user 90 to the transportation vehicle 3 via the network 80. Note that the processing in Step 210b is performed based on the departure date and time information 10c included in the route information 10 stored in the first storage unit 2b. In other words, the second control unit 2a transmits the information on the departure date included in the departure date and time information 10c, and the information 14 on the belongings of the user 90, to the transportation vehicle 3. Note that the second control unit 2a transmits the route information 10 and the information 14 on the belongings of the user 90 to the transportation vehicle 3 that can be provided to the user 90 out of a plurality of the transportation vehicles 3 stored at the storage location.

Next, the processing moves to the transportation vehicle 3. That is, in Step 300a, the transportation vehicle 3 receives the route information 10 and the information 14 on the belongings of the user 90.

In Step 300b, the transportation vehicle 3 moves to the departure point based on the information 10a (see FIG. 4) on the departure point included in the route information 10.

In other words, in Step 210b, Step 300a, and Step 300b, the server 2 acquires the route information 10 and provides the user 90 with a transportation vehicle 3 that can transport the user 90 without having the user 90 to drive.

Next, in Step 300c, the transportation vehicle 3 starts moving toward the destination point based on the destination point information 10b (see FIG. 4) included in the route information 10. Note that in this embodiment, the transportation vehicle 3 starts moving based on the operation input of the transportation start made by the user 90 who has boarded the transportation vehicle 3.

In Step 300d, the transportation vehicle 3 transmits the movement information 13 on the user 90 and the information 15 on the physical conditions of the user 90 to the server 2 via the network 80.

Next, the processing moves to processing by the server 2. That is, in Step 210c, the server 2 receives the movement information 13 on the user 90 and the information 15 on the physical conditions of the user 90 transmitted from the transportation vehicle 3. The server 2 stores the received movement information 13 on the user 90 and the information 15 about the physical conditions of the user 90 in the first storage unit 2b.

Next, the processing moves to processing by the terminal 1. That is, in Step 120d, the terminal 1 transmits a request to acquire the movement information 13 on the user 90 input by the guardian 91 to the server 2.

Next, the processing moves to the server 2. That is, in Step 210d, the server 2 receives the request to acquire the movement information 13 on the user 90 transmitted from the terminal 1.

In Step 210e, the server 2 provides the movement information 13 on the user 90 so that the guardian 91 in the remote location can view it. In other words, the server 2 transmits the browsing screen 37 (see FIG. 13) including the movement information 13 on the user 90 to the terminal 1 via the network 80.

Next, the processing moves to the terminal 1. That is, in Step 120e, the terminal 1 receives the movement information 13 on the user 90 and the information 15 on the physical conditions of the user 90. The terminal 1 then displays the movement information 13 on the user 90 and the information 15 on the physical conditions of the user 90 on the first display unit 1c (see FIG. 2).

Note that the processing in Step 300d, the processing in Step 210c, and the processing in Step 210e are continuously performed at predetermined times until the transportation vehicle 3 arrives at the destination point after the request to acquire the movement information 13 on the user 90 is transmitted by the guardian 91 in Step 120d.

Specifically, in Step 300e, it is determined whether the transportation vehicle 3 has arrived at the destination point. More specifically, it is determined whether the transportation vehicle 3 has arrived at the destination point based on the information 10b on the destination point and the information on the current location of the transportation vehicle 3. In the case where the transportation vehicle 3 has not arrived at the destination point, the processing proceeds to Step 300d. In the case where the transportation vehicle 3 has arrived at the destination point, the processing proceeds to Step 300f.

In Step 300f, the transportation vehicle 3 stops transmitting the movement information 13 on the user 90. The transportation vehicle 3 then travels to the predetermined return location. Note that the processing in Step 300f is performed after the confirmation by the transportation vehicle 3 that the user 90 has got off the transportation vehicle 3. Thereafter, the processing by the transportation vehicle 3 is terminated.

Note that when the transmission of the movement information 13 on the user 90 from the transportation vehicle 3 is stopped in Step 300f, the second control unit 2a stops storing the movement information 13 on the user 90 and transmitting the information to the terminal 1.

### (Effects of This Embodiment)

In this embodiment, the following effects can be obtained.

In this embodiment, as described above, the transportation service provision system 100 is a transportation service provision system that provides a transportation service to the user 90 who has difficulty in driving the transportation vehicle 3. The system is provided with the terminal 1 for the guardian 91 of the user 90 to input the route information 10 on the user 90 when the user is transported in advance, and a server 2 owned by the company 92 that provides the transportation service to the user 90. The server 2 includes the first storage unit 2B for storing the user 90 and the guardian 91 in an associated manner, and a second control unit 2a for acquiring the route information 10 and providing a transportation vehicle 3 capable of transporting the user 90 without having the user 90 to drive the vehicle to the user 90.

With this, it is possible to provide the transportation vehicle 3 to the user 90 based on the movement route information 10 input by the guardian 91, without the user 90 having to request the provision of the transportation vehicle 3. As a result, it is possible to provide the transportation vehicle 3 to the user 90 who has difficulty in driving the transportation vehicle 3 and also has difficulty in requesting the provision of the transportation vehicle 3 by themselves.

Further, in this embodiment, as described above, the transportation service provision method is a transportation service provision method for providing a transportation service to a user 90 who has difficulty in driving the transportation vehicle 3. The method includes a step of inputting, in advance, the route information 10 on the user 90 when the user is transported by the guardian 91 of the user 90, a step for the server 2 to store the user 90 and the guardian 91 in an associated manner, and a step for the server 2 to acquire the movement route information 10 and provide the user 90 with the transportation vehicle 3 that can transport the user 90 without having the user 90 to drive the vehicle.

With this, similar to the above-described transportation service provision system 100, it is possible to provide a transportation service provision method capable of providing the transportation vehicle 3 to the user 90 who has difficulty in driving the transportation vehicle 3 and also has difficulty in requesting the provision of the transportation vehicle 3 by themselves.

Further, in the above-described embodiment, the following further effects can be obtained by configuring as follows.

In other words, in this embodiment, as described above, the second control unit 2a (control unit) is configured to provide the movement information 13 on the user 90 so that the guardian 91 in the remote location can view it. With this, the second control unit 2a provides the movement information 13 on the user 90 so that the guardian 91 in the remote location can view the movement information 13, and therefore, it is possible for the guardian 91 in the remote location to confirm the movement information on the user 90. As a result, the guardian 91 in a remote location can easily grasp the movement of the user 90. Particularly, in the case where the user 90 is an aged person, a dementia patient, or other person requiring care, it is effective for the guardian 91 in a remote location to be able to monitor the movement status of the user 90.

Further, in this embodiment, as described above, the second control unit 2a (control unit) is configured to provide the screen (browsing screen 37) displaying the movement information 13 on the user 90 so that the guardian 91 in the remote location can view the information on the user at the terminal 1. With this, the guardian 91 in the remote location can browse the movement information 13 on the user 90 on the screen displayed at the terminal 1, and thus can easily grasp the movement information 13 on the user 90 at a glance, as compared with the configuration in which the movement information 13 on the user 90 is browsed only by textual information. As a result, it is possible to suppress the anxiety of the guardian 91 in a remote location due to the difficulty of directly monitoring the movement status of the user 90.

Furthermore, in this embodiment, as described above, the second control unit 2a (control unit) is configured to acquire the correspondence relationship between the user 90 and the guardian 91 based on the information 11 on the user 90 input by the guardian 91 at the terminal 1 and stored in the first storage unit 2b (storage unit), and provide the screen (browsing screen 37) displaying the movement information 13 on the user 90 to the guardian 91 in the remote location based on the acquired correspondence relationship between the user 90 and the guardian 91. With this, the movement information 13 on the user 90 can be easily acquired based on the correspondence between the user 90 and the guardian 91. As a result, it is possible to easily provide the movement information 13 on the user 90 to the guardian 91 in a remote location.

Further, in this embodiment, the second control unit 2a (control unit) is configured to provide the movement information 13 in real time during the transportation of the user 90, or the movement information 13 including the transportation history of the user 90 after the completion of the movement, to the guardian 91 in the remote location. With this, the guardian 91 can confirm the movement information 13 on the user 90 in real time during the transportation of the user 90, or the movement information 13 including the transportation history after completion of the transportation of the user 90. As a result, the movement information 13 in real time during the transportation of the user 90 or the movement information 13 including the usage history can be easily grasped by the guardian 91, thus improving the convenience (usability) of the guardian 91.

Furthermore, in this embodiment, the route information 10, as described above, the route information 10 includes the information 10a on the departure point and the information 10b on the destination point when the user is transported, which were input by the guardian 91 by the terminal 1. The first storage unit 2b (storage unit) is configured to store the information 10a on the departure point, the information 10b on the destination point, and the departure date and time information 10c, as the route information 10. The second control unit 2a is configured to set the movement route 52 of the user 90 based on the information 10a on the departure point, the information 10b on the destination point, and the departure date and time information 10c.

With this, the second control unit 2a can set the optimal movement route 52 according to the departure point information 10a, the destination point information 10b, and the departure date and time information 10c. As a result, for example, it is possible to avoid congested routes, thereby improving the convenience (usability) of the user 90. Furthermore, the movement route 52 for the transportation of the user 90 is set up without the guardian 91 having to set up all the details of the movement route 52 from the departure point to the destination point. Therefore, it is possible to reduce the burden on the guardian 91.

Further, in this embodiment, as described above, the transportation vehicle 3 is an autonomous vehicle. The second control unit 2a (control unit) is configured to perform control to automatically move the transportation vehicle 3 to the departure point of the user 90 based on the departure point information 10a and the departure date and time information 10c. This allows the transportation vehicle 3 to be moved to the departure point of the user 90 without the user 90 themselves having to perform an operation to move the transportation vehicle 3 to the departure point, such as, for example, a call operation of the transportation vehicle 3. As a result, it is possible to reduce the burden on the user 90 to start the use of the transportation vehicle 3.

Further, in this embodiment, as described above, the second control unit 2a (control unit) is configured to perform control to automatically move the transportation vehicle 3 to a predetermined return location when the transportation of the user 90 is completed. This allows the transportation vehicle 3 to be moved to the return location without having the user 90 themselves to perform the operation to move the transportation vehicle 3 to the return location, for example, to return the transportation vehicle 3. As a result, the burden on the user 90 can be reduced because the operation to return the transportation vehicle 3 is no longer necessary.

Further, in this embodiment, as described above, the system is further provided with the third display unit 3c (display unit) provided in the transportation vehicle 3 and the call function unit 3d that enables the user 90 to call the guardian 91 or the facility at the destination of the user 90. The third display unit 3c is configured to display the call initiation operation unit 43d for initiating a call by the call function unit 3d. With the above, the user 90 can easily start a call by operating the call initiation operation unit 43d displayed on the third display unit 3c since the call initiation operation unit 43d is displayed on the third display unit 3c. As a result, the user 90 can easily call the guardian 91 or the facility at the destination of the user 90 during the transportation, which improves the convenience (usability) of the user 90.

Further, in this embodiment, as described above, a third display unit 3c (display unit) is further provided in the transportation vehicle 3. The first storage unit 2b (storage unit) is configured to store in advance the information 14 on the belongings of the user 90 input by the guardian 91 by the terminal 1. The second control unit 2a (control unit) is configured to determine, based on the information on the belongings of the user 90 stored on the first storage unit 2b, whether the user 90 has forgotten to load the belongings of the user 90 on the transportation vehicle 3. Or in the case where the user 90 have been forgotten to unloaded the belongings from the transportation vehicle 3, the second control unit 2a is configured to cause the third display unit 3c to display the fact.

With this, in the case where the fact that the user 90 forgot to load belongings to the transportation vehicle 3 is displayed on the third display unit 3c, the user 90 can know in advance that the user 90 has forgotten to load their belongings. As a result, it is possible to prevent the initiation of the transportation process in a state where the user 90 has forgotten their belongings. Further, in the case where the third display unit 3c shows that the user 90 has forgotten to unload their belongings that have been loaded into the transportation vehicle 3, it is possible to prevent the user 90 from leaving the transportation vehicle 3 with their belongings still loaded in the transportation vehicle 3. As a result, it is possible to prevent the user 90 from losing their belongings.

Further, in this embodiment, as described above, the user 90 is an aged person or a dementia patient. The second control unit 2a (control unit) is configured to perform control to notify the user 90 of at least one of the caution notice information 20 when getting on and off the transportation vehicle 3, and the information 22 to inhibit getting off the transportation vehicle 3 while being transported by the transportation vehicle 3, to the user 90.

With this, in the case where the caution notice information 20 is notified to the user 90, it is possible to prevent the user 90, who is an aged person or a dementia patient, from hitting their head, for example, against the transportation vehicle 3 when getting in and out of the transportation vehicle 3. Further, in the case where the information 22 to inhibit the user from getting off the vehicle is notified to the user 90, it is possible to inhibit the user 90, who is an aged person or a dementia patient, from accidentally getting off the moving transportation vehicle 3. As a result, the user 90, who is an aged person or a dementia patient, can be restrained in advance from being injured.

Further, in this embodiment, as described above, the system is further provided with the physical condition information acquisition unit 3e for acquiring the information 15 on the physical conditions of the user 90 when the user 90 is being transported by the transportation vehicle 3, and the second control unit 2a (control unit) is configured to provide the information 15 on the physical conditions of the user 90 during the transportation to the guardian 91 in a remote location.

This allows the guardian 91 in the remote location to easily check the information 15 on the physical conditions of the user 90 during the transportation. As a result, the physical conditions of the user 90 can be easily grasped, thereby reducing the anxiety of the guardian 91 in a remote location who has difficulty in directly grasping the physical conditions of the user 90.

Further, in this embodiment, as described above, the first storage unit 2b (storage unit) is configured to store in advance the concerns 16 about the physical conditions of the user 90 input by the guardian 91 by the terminal 1. The second control unit 2a (control unit) is configured to provide the information 15 about the physical conditions of the user 90 during the transportation to the guardian 91 in a remote location based on the concerns 16 about the physical conditions of the user 90 stored in the first storage unit 2b and the information 15 about the physical conditions of the user 90 acquired by the body condition information acquisition unit 3e during the transportation.

With this, the second control unit 2a can selectively provide the guardian 91 with the information highly relevant to the concerns 16 about the physical conditions of the user 90 among the information 15 on the physical conditions of the user 90.

### <Modifications>

Note that the embodiments disclosed here should be considered illustrative and not restrictive in all respects. It should be noted that the scope of the present invention is indicated by claims and is intended to include all modifications (modified examples) within the meaning and scope of the claims and equivalents.

For example, in the above-described embodiment, an example is shown in which the second control unit 2a is configured to provide the movement information on the user 90 so that the guardian 91 in the remote location can view the movement information 13, but the present invention is not limited thereto. For example, the second control unit 2a need not be configured to provide the movement information 13 on the user 90 so that the guardian 91 in the remote location can view it.

However, in the case where the second control unit 2a is not configured to provide the movement information 13 on the user 90 so that it can be viewed by the guardian 91 in the remote location, the guardian 91 in the remote location will not be able to monitor the movement status of the user 90. Therefore, it is preferable that the second control unit 2a be configured to provide the movement information 13 on the user 90 so that the guardian 91 in the remote location can view the information.

Further, in the above-described embodiment, an example is shown in which the second control unit 2a provides the screen (browsing screen 37) displaying the movement information 13 on the user 90 so that the guardian 91 in the remote location can view it at the terminal 1, but the present invention is not limited thereto. For example, the second control unit 2a need not be configured to provide the movement information 13 on the user 90 so that the guardian 91 in the remote location can view the screen (browsing screen 37) displaying the movement information 13 on the user 90. The second control unit 2a may be configured to provide the movement information 13 on the user 90 to the terminal 1 of the guardian 91 in the remote location as textual information.

However, in the case where the second control unit 2a is not configured to provide the screen displaying the movement information 13 on the user 90 (browsing screen 37) so that the guardian 91 in the remote location can view it at the terminal 1, the guardian 91 will have difficulty in easily grasping the movement information 13 on the user 90 at a glance. Therefore, it is preferable that the second control unit 2a be configured to provide a screen (browsing screen 37) displaying the movement information 13 on the user 90 so that the guardian 91 in the remote location can view the information at the terminal 1.

Further, in the above-described embodiment, an example is shown in which the transportation service provision system 100 provides both the real-time movement information 13 and the movement information 13 including the movement history to the guardian 91, but the present invention is not limited thereto. For example, the transportation service provision system 100 may be configured to provide only one of the real-time movement information 13 and the movement information 13 including the movement history to the guardian 91.

Further, in the above-described embodiment, an example is shown in which the second control unit 2a acquires the route 52 for the movement information on the user 90 based on the route information 10, but the present invention is not limited thereto. It may be configured such that the route 52 is acquired by the first control unit 1a, or by the third control unit 3a.

Further, in the above-described embodiment, an example is shown in which the transportation vehicle 3 is an autonomous vehicle, but the present invention is not limited thereto. For example, the transportation vehicle 3 can be any vehicle as long as it is driven by someone other than the user 90. For example, the transportation vehicle 3 may be a taxi vehicle or a vehicle provided by a car sharing service as long as the vehicle is driven by someone other than the user 90.

Further, in the above-described embodiment, an example is shown in which the transportation vehicle 3 is an autonomous vehicle, but the present invention is not limited thereto. For example, the transportation vehicle 3 may not be equipped with the call function unit 3d. However, in the case where the transportation vehicle 3 is not equipped with the call function unit 3d, it is difficult for the user 90 to easily contact their guardian 91 or other persons when the user 90 is being transported by the transportation vehicle 3. Therefore, it is preferable that the transportation vehicle 3 be equipped with the call function unit 3d.

Further, in the above-described embodiment, an example is shown in which the second control unit 2a determines whether the user 90 has forgotten to load or unload their belongings, but the present invention is not limited thereto. For example, it may be configured such that the third control unit 3a determines whether the user 90 has forgotten to load or unload their belongings.

Further, in the above-described embodiment, an example is shown in which the second control unit 2a displays the information 20 that the user 90 has forgotten to load belongings and the information 23 that the user 90 has forgotten to unload belongings, but the present invention is not limited thereto. For example, it may be configured such that the third control unit 3a notifies the user 90 of the information 20 indicating that the user has forgotten to load belongings and the information 23 indicating that the user has forgotten to unload belongings.

Further, in the above-described embodiment, an example is shown in which the transportation service provision system 100 determines whether the user 90 has forgotten to load or unload their belongings, but the present invention is not limited thereto. For example, it may be configured such that for example, the transportation service provision system 100 need not be configured to determine whether the user 90 has forgotten to load or unload their belongings.

However, in the case where the transportation service provision system 100 is not configured to determine whether the user 90 has forgotten to load or unload their belongings, the convenience (usability) of the user 90 will be reduced. Therefore, the transportation service provision system 100 is preferably configured to determine whether the user 90 has forgotten to load or unload their belongings.

Further, in the above-described embodiment, an example is shown in which the second control unit 2a notifies the user 90 of the caution notice information 20 and the information 22 to restrain the user from getting off the vehicle, but the present invention is not limited thereto. For example, it may be configured such that the third control unit 3a notifies the user 90 of the caution notice information 20 and the information 22 that discourages the user from getting off the vehicle.

Further, in the above-described embodiment, an example is shown in which the transportation service provision system 100 notifies the user 90 of both the caution notice information 20 and the information 22 to restrain the user from getting off the vehicle, but the present invention is not limited thereto. For example, the transportation service provision system 100 may be configured to notify the user 90 of either the caution notice information 20 or the information 22 to discourage the user from getting off the vehicle.

However, considering the safety of the user 90, it is preferable that the transportation service provision system 100 be configured to notify the user 90 of both the caution notice information 20 and the information 22 to inhibit the user from getting off the vehicle.

Further, in the above-described embodiment, an example is shown in which the transportation service provision system 100 notifies the user 90 of both the caution notice information 20 and the information 22 to restrain the user from getting off the vehicle, but the present invention is not limited thereto. For example, the transportation service provision system 100 may be configured not to notify the user 90 of both the caution notice information 20 and the information 22 to inhibit the user from getting off the vehicle.

However, considering the safety of the user 90, it is preferable that the transportation service provision system 100 be configured to notify the user 90 of both the caution notice information 20 and the information 22 to inhibit the user from getting off the vehicle.

Furthermore, in the above-described embodiment, an example is shown in which the transportation service provision system 100 is equipped with the physical condition information acquisition unit 3e, but the present invention is not limited thereto. For example, the transportation service provision system 100 may not provide such a physical condition information acquisition unit 3e.

However, in the case where the transportation service provision system 100 is not equipped with the physical condition information acquisition unit 3e, the guardian 91 in the remote location cannot confirm the information 15 on the physical conditions of the user 90. Therefore, the transportation service provision system 100 is preferably equipped with the physical condition information acquisition unit 3e.

Furthermore, in the above-described embodiment, an example is shown in which the physical condition information acquisition unit 3e acquires the body temperature, the pulse rate, the posture, the gaze, and the grip strength of the user 90 as the information 15 on the physical conditions of the user 90, but the present invention is not limited thereto. For example, the physical condition information acquisition unit 3e may acquire, as the information 15 on the physical conditions of the user 90, information other than the body temperature, the pulse rate, the posture, the gaze, and the grip strength of the user 90. The information acquired by the physical condition information acquisition unit 3e may be any information as long as it is information related to the physical conditions of the user 90.

Further, in the above-described embodiment, an example is shown in which the second control unit 2a provides the information 15 on the physical conditions of the user 90 to the guardian 91 based on the concerns 16 about the physical conditions of the user 90, but the present invention is not limited thereto. The second control unit 2a may be configured to provide all of the information 15 on the physical conditions of the user 90 acquired by the physical condition information acquisition unit 3e to the guardian 91, not based on the concerns 16 about the physical conditions of the user 90.

Further, in the above-described embodiment, an example is shown in which the information 11 on the user 90 includes the name, the date of birth, the address, the telephone number, and the e-mail address of the user 90, but the present invention is not limited thereto. For example, the information on the user 90 11 may include the personal number of the user 90 (a so-called "my number"), the passport number of the user 90, etc.

Further, in the above-described embodiment, an example is show in which the information 12 on the guardian 91 includes the name, the date of birth, the address, the telephone number, and the e-mail address of the guardian 91, but the present invention is not limited thereto. For example, the information 12 on the guardian 91 may include the personal number of the guardian 91 (a so-called "my number"), the passport number of the guardian 91, the driver's license number of the guardian 91, and so on.

Further, in the above-described embodiment, an example is shown in which the departure date and time information 10c to be input by the guardian 91 is only one day on which the transportation vehicle 3 is provided to the user 90, but the present invention is not limited thereto. For example, the departure date and time information 10c input by the guardian 91 may be multiple dates or a specific day of the week.

Further, in the above-described embodiment, an example is shown in which the guardian 91 inputs the information 11 on the user 90, but the present invention is not limited thereto. For example, it may be configured such that the user 90 themselves inputs the information 11 on the user 90.

### [Aspects]

It would be understood by those skilled in the art that the exemplary embodiments described above are specific examples of the following aspects.

### (Item 1)

A transportation service provision system for providing a transportation service to a user having difficulty in driving a transportation vehicle, the system comprising:
a terminal configured for a guardian of the user to input route information on transportation of the user in advance; and
a server owned by a company that provides the user with the transportation service,
wherein the server includes a storage unit configured to store the user and the guardian in an associated manner, and a control unit configured to acquire the route information and provide the user with the transportation vehicle capable of transporting the user without the user having to drive.

### (Item 2)

The transportation service provision system as recited in the above-described Item 1,
wherein the control unit is configured to provide movement information on the user so that the guardian in a remote location is capable of viewing the movement information.

### (Item 3)

The transportation service provision system as recited in the above-described Item 2,
wherein the control unit is configured to provide a screen displaying the movement information on the user such that the guardian in the remote location is capable of viewing the screen with the terminal.

### (Item 4)

The transportation service provision system as recited in the above-described Item 3,
wherein the control unit is configured to acquire a correspondence relationship between the user and the guardian based on information on the user input by the guardian with the terminal and stored in the storage unit and provide the guardian in the remote location with a screen displaying the movement information on the user based on the acquired correspondence relationship between the user and the guardian.

### (Item 5)

The transportation service provision system as recited in the above-described Item 3 or 4,
wherein the control unit is configured to provide the movement information in real time whiwherein the control unit is configured to provide the guardian in the remote location with real-time movement information during the transportation or the movement information including a movement history after completion of the transportation of the user.

### (Item 6)

The transportation service provision system as recited in any one of the above-described Items 1 to 5,
wherein the route information includes information on a departure point and information on a destination point for the transportation of the user input by the guardian with the terminal, and departure date and time information that is information on a date and a time when the user departs the departure point,
wherein the storage unit is configured to store, as the route information, the information on the departure point, the information on the destination point, and the departure date and time information, and
wherein the control unit is configured to set a movement route of the user based on the information on the departure point, the information on the destination point, and the departure date and time information.

### (Item 7)

The transportation service provision system as recited in the above-described Item 6,
wherein the transportation vehicle is an autonomous vehicle, and
wherein the control unit is configured to perform control to automatically move the transportation vehicle to the departure point of the user, based on the information on the departure point and the departure date and time information.

### (Item 8)

The transportation service provision system as recited in the above-described Item 7,
wherein the control unit is configured to perform control to automatically move the transportation vehicle to a predetermined return location upon completion of the transportation of the user.

### (Item 9)

The transportation service provision system as recited in any one of the above-described Items 1 to 8, further comprising:
a display unit installed in the transportation vehicle; and
a call function unit installed in the transportation vehicle, the call function unit allowing the user to communicate with the guardian or a destination facility of the user,
wherein the display unit is configured to display a call initiation operation unit which is an operation unit to initiate a call by the call function unit.

### (Item 10)

The transportation service provision system as recited in any one of the above-described Items 1 to 8, further comprising:
a display unit installed in the transportation vehicle,
wherein the storage unit is configured to store information on belongings of the user input by the guardian with the terminal in advance, and
wherein the control unit is configured to determine, based on the information on the belongings of the user stored in the storage unit, whether the user has forgotten to load the belongings in the transportation vehicle or unload the belongings from the transportation vehicle, and display a fact that the use has forgotten to load the belongings in the transportation vehicle or unload the belongings from the transportation vehicle, on the display unit.

### (Item 11)

The transportation service provision system as recited in any one of the above-described Items 1 to 9,
wherein the user is an aged person or a dementia patient, and
wherein the control unit is configured to perform control to notify the user of at least one of caution notice information when getting in and out of the transportation vehicle and information to restrain the user from getting out of the transportation vehicle during the transportation by the transportation vehicle.

### (Item 12)

The transportation service provision system as recited in any one of the above-described Items 1 to 11, further comprising:
a physical condition information acquisition unit configured to acquire information about the physical conditions of the user when the user is being transported by the transportation vehicle,
wherein the control unit is configured to provide the guardian in the remote location with the information about the physical conditions of the user during the transportation.

### (Item 13)

The transportation service provision system as recited in the above-described Item 12,
wherein the storage unit is configured to store in advance concerns about the physical conditions of the user input by the guardian with the terminal, and
wherein the control unit is configured to provide the guardian in the remote location with information on the physical conditions of the user during the transportation, based on the concerns about the physical conditions of the user stored in the storage unit and the information on the physical conditions of the user acquired by the physical condition information acquisition unit.

### (Item 14)

A transportation service provision method for providing a transportation service to a user having difficulty in driving a transportation vehicle, the method comprising:
a step for the guardian of the user to input route information on transportation of the user in advance;
a step for the server to store the user and the guardian in an associative manner; and
a step for the server to acquire the route information and provide the user with the transportation vehicle capable of transporting the user without the user having to drive the vehicle.

## Claims

1. A transportation service provision system (100) for providing a user (90) having difficulty in driving a transportation vehicle (3) with a transportation service, the system comprising:
a terminal (1) configured for a guardian (91) of the user (90) to input route information (10) on transportation of the user (90) in advance; and
a server (2) owned by a company (92) that provides the user (90) with the transportation service,
wherein the server (2) includes a storage unit (2b) configured to store the user (90) and the guardian (91) in an associated manner, and a control unit (2a) configured to acquire the route information (10) and provide the user (90) with the transportation vehicle (3) capable of transporting the user (90) without the user (90) having to drive.

2. The transportation service provision system (100) as recited in claim 1,
wherein the control unit (2a) is configured to provide movement information on the user (13) so that the guardian (91) in a remote location is capable of viewing the movement information (13).

3. The transportation service provision system (100) as recited in claim 2,
wherein the control unit (2a) is configured to provide a screen (37) displaying the movement information on the user (13) such that the guardian (91) in the remote location is capable of viewing the screen (37) with the terminal (1).

4. The transportation service provision system (100) as recited in claim 3,
wherein the control unit (2a) is configured to acquire a correspondence relationship between the user (90) and the guardian (91) based on information on the user (11) input by the guardian (91) with the terminal (1) and stored in the storage unit (2b) and provide the guardian (91) in the remote location with a screen (37) displaying the movement information on the user (13) based on the acquired correspondence relationship between the user (90) and the guardian (91).

5. The transportation service provision system (100) as recited in claim 4,
wherein the control unit (2a) is configured to provide the guardian (91) in the remote location with real-time movement information during the transportation (13) or the movement information including a movement history after completion of the transportation (13) of the user (90).

6. The transportation service provision system (100) as recited in claim 1,
wherein the route information (10) includes information on a departure point (10a) and information on a destination point (10b) for the transportation of the user (90) input by the guardian (91) with the terminal (1), and departure date and time information (10c) that is information on a date and a time when the user (90) departs the departure point,
wherein the storage unit (2b) is configured to store, as the route information (10), the information on the departure point (10a), the information on the destination point (10b), and the departure date and time information (10c), and
wherein the control unit (2a) is configured to set a movement route (52) of the user (90) based on the information on the departure point (10a), the information on the destination point (10b), and the departure date and time information (10c).

7. The transportation service provision system (100) as recited in claim 1,
wherein the transportation vehicle (3) is an autonomous vehicle, and
wherein the control unit (2a) is configured to perform control to automatically move the transportation vehicle (3) to the departure point of the user (90), based on the information on the departure point (10a) and the departure date and time information (10c).

8. The transportation service provision system (100) as recited in claim 7,
wherein the control unit (2a) is configured to perform control to automatically move the transportation vehicle (3) to a predetermined return location upon completion of the transportation of the user (90).

9. The transportation service provision system (100) as recited in claim 1, further comprising:
a display unit (3c) installed in the transportation vehicle (3); and
a call function unit (3d) installed in the transportation vehicle (3), the call function unit allowing the user (90) to communicate with the guardian (91) or a destination facility of the user (90),
wherein the display unit (3c) is configured to display a call initiation operation unit (43d) which is an operation unit to initiate a call by the call function unit (3d).

10. The transportation service provision system (100) as recited in claim 1, further comprising:
a display unit (3c) installed in the transportation vehicle (3),
wherein the storage unit (2b) is configured to store information on belongings (14) of the user (90) input by the guardian (91) with the terminal (1) in advance, and
wherein the control unit (2a) is configured to determine, based on the information on the belongings (14) of the user (90) stored in the storage unit (2b), whether the user (90) has forgotten to load the belongings in the transportation vehicle (3) or unload the belongings from the transportation vehicle (3), and display a fact that the user (90) has forgotten to load the belongings in the transportation vehicle or unload the belongings from the transportation vehicle, on the display unit (3c).

11. The transportation service provision system (100) as recited in claim 1,
wherein the user (90) is an aged person or a dementia patient, and
wherein the control unit (2a) is configured to perform control to notify the user (90) of at least one of caution notice information (20) when getting in and out of the transportation vehicle (3) and information to restrain (22) the user from getting out of the transportation vehicle (3) during the transportation by the transportation vehicle (3).

12. The transportation service provision system (100) as recited in claim 1, further comprising:
a physical condition information acquisition unit (3e) configured to acquire information about the physical conditions (15) of the user (90) when the user (90) is being transported by the transportation vehicle (3),
wherein the control unit (2a) is configured to provide the guardian (91) in the remote location with the information about the physical conditions (15) of the user (90) during the transportation.

13. The transportation service provision system (100) as recited in claim 12,
wherein the storage unit (2b) is configured to store in advance concerns about the physical conditions (16) of the user (90) input by the guardian (91) with the terminal (1), and
wherein the control unit (2a) is configured to provide the guardian (91) in the remote location with information on the physical conditions (15) of the user (90) during the transportation, based on the concerns about the physical conditions (16) of the user (90) stored in the storage unit (2b) and the information on the physical conditions (15) of the user (90) acquired by the physical condition information acquisition unit (3e).

14. A transportation service provision method for providing a user (90) having difficulty in driving a transportation vehicle (3) with a transportation service, the method comprising:
a step for the guardian (91) of the user (90) to input route information (10) on transportation of the user (90) in advance;
a step for the server (2) to store the user (90) and the guardian (91) in an associative manner; and
a step for the server (2) to acquire the route information (10) and provide the user (90) with the transportation vehicle (3) capable of transporting the user (90) without the user (90) having to drive the vehicle.
